# FASCICULE DE BREVET EUROPEEN

(11) **EP 2 774 208 B1**
(45) Date de publication et mention de la délivrance du brevet: **03.05.2017**
(21) Numéro de dépôt: 12794399.1
(22) Date de dépôt: 30.10.2012
(51) Int. Cl.: H01M 10/0562, H01M 10/052, H01M 10/0564, H01M 10/058, H01M 4/04

(54) **PROCEDE DE REALISATION DE FILMS MINCES D'ELECTROLYTE SOLIDE POUR LES BATTERIES A IONS DE LITHIUM**
VERFAHREN ZUR HERSTELLUNG VON DÜNNSCHICHTEN EINES FESTSTOFFELEKTROLYTS FÜR LITHIUMIONENBATTERIEN
METHOD FOR THE PRODUCTION OF THIN FILMS OF SOLID ELECTROLYTE FOR LITHIUM ION BATTERIES

(30) Priorité: 02.11.2011 FR 1159893
(43) Date de publication de la demande: 10.09.2014
(73) Titulaire: I-TEN, 69410 Champagne-au-Mont-d'Or (FR)
(72) Inventeur: BOUYER, Frédéric, F-21160 Perrigny Les Dijon (FR); VUILLEMIN, Bruno, F-39230 Darbonnay (FR); GABEN, Fabien, F-69130 Ecully (FR)
(74) Mandataire: Schmidt, Martin Peter
(86) Numéro de dépôt international: PCT/FR2012/052497
(87) Numéro de publication internationale: WO 2013/064772

(56) Documents cités:
- EP-A2- 0 453 796
- JP-A- 2002 042 792
- US-A- 3 959 022
- US-A1- 2002 172 871
- US-A1- 2003 134 176
- US-A1- 2004 222 098

## Description

### Domaine de l'invention

La présente invention appartient au domaine des batteries et notamment des batteries à ions de lithium. Elle concerne plus particulièrement les batteries à ions de lithium entièrement solides, et encore plus particulièrement un nouveau procédé de fabrication de couches minces d'électrolyte solide pour de telles batteries.

### État de la technique

La batterie idéale pour l'alimentation des dispositifs électriques autonomes (tels que : téléphone et ordinateurs portables, outils portatifs, capteurs autonomes) ou bien pour la traction des véhicules électriques présenterait une durée de vie élevée, serait capable de stocker à la fois de grandes quantités d'énergie et de puissance, et ne présenterait pas de risque de surchauffe voire d'explosion.

Actuellement ces dispositifs électriques sont alimentés essentiellement par des batteries à ions de lithium (appelées ici « batteries Li-ion »), qui présentent la meilleure densité d'énergie parmi les différentes technologies de stockage proposées. Cependant, il existe différentes architectures et compositions chimiques d'électrodes permettant de réaliser des batteries Li-ion.

Les modes de fabrication des batteries Li-ion sont présentés dans de nombreux articles et brevets, et l'ouvrage « Advances in Lithium-ion batteries » (ed. W. van Schalkwijk et B. Scrosati), paru en 2002 (Kluever Academic / Plénum Publishers) en donne un bon état des lieux.

Les électrodes des batteries Li-ion peuvent être fabriquées à l'aide de techniques de revêtement (par exemple par les techniques appelées couramment par leur noms anglais roll coating, doctor blade, tape casting). Elles permettent de réaliser des dépôts d'une épaisseur comprise entre 50 et 400 µm. En fonction de l'épaisseur du dépôt, de sa porosité et de la taille des particules actives, la puissance et l'énergie de la batterie peuvent être modulées. Les encres (ou pâtes) déposées sur les électrodes contiennent à la fois des particules de matériaux actifs mais également des liants (organiques), de la poudre de carbone permettant d'assurer le contact électrique entre les particules, et des solvants qui sont évaporés lors de l'étape de séchage des électrodes.

Pour améliorer la qualité des contacts électriques entre les particules et compacter les dépôts une étape de calandrage est réalisée sur les électrodes. Après cette étape de compression, les particules actives des électrodes occupent environ 60% du volume, ce qui signifie qu'il reste généralement 40% de porosité entre les particules, remplie par un électrolyte. Cet électrolyte assure le transport des ions lithium entre les particules (la diffusion du lithium dans l'épaisseur de l'électrode). Il peut être indifféremment liquide (solvant aprotique dans lequel un sel de lithium est dissous) ou sous forme de polymère imprégné d'un sel de lithium. Les liants utilisés dans la formulation des encres contribuent généralement au transport des ions lithium..

Ces batteries comportent en outre un séparateur placé entre l'anode et la cathode. Il s'agit d'un film polymère poreux d'environ 20 µm d'épaisseur. C'est durant l'assemblage final de la batterie, lorsque l'anode et la cathode sont empilées ou enroulées avec le séparateur entre elles que l'électrolyte est ajouté. L'électrolyte migre à la fois dans les porosités contenues dans le séparateur et dans les électrodes et assure ainsi la conduction ionique entre les électrodes.

En fonction de l'épaisseur des dépôts, des tailles et densité de particules actives contenues dans l'encre, la puissance et l'énergie de la batterie peuvent être modulées. Avec de telles architectures, l'augmentation de la densité d'énergie se fait nécessairement au détriment de la densité de puissance. Les cellules batterie de fortes puissances nécessitent des électrodes de faible épaisseur, avec des particules de faibles diamètres, alors que l'accroissement de la densité d'énergie demande au contraire d'accroitre cette même épaisseur.

De plus lorsque l'on cherche à réaliser des batteries de forte puissance, il convient d'augmenter la porosité du film séparateur afin de réduire la résistance au transport des ions lithium entre les deux électrodes. Cependant cette augmentation de la porosité tend à accroitre les risques de court-circuit internes à la cellule batterie, du lithium métallique étant susceptible de précipiter dans les pores. De la même manière, des particules d'électrodes de trop faible dimension pourraient se détacher de l'électrode et migrer dans ces pores.

Les électrolytes à base de solvants organiques et sels de lithium tendent à s'oxyder plus rapidement sous l'effet de potentiels électriques élevés et/ou températures, de traces d'humidité trop élevées. Cette oxydation peut être lente et continue lors de l'exposition de la cellule batterie à un environnement externe tempéré (vieillissement), mais elle peut aussi devenir rapide et brutale en cas de surchauffe, ou surcharge. L'évaporation et la combustion de cet électrolyte peuvent alors amorcer une réaction violente pouvant conduire à l'explosion de la cellule.

Afin de réduire ces risques, des films polymères denses conducteurs des ions lithium peuvent être utilisés comme séparateurs. Ces films sont également plus résistifs et leur faible conductivité ionique doit être compensée par une faible épaisseur pour ne pas trop dégrader les performances de la batterie. Les techniques actuelles de fabrication des films polymères, ainsi que leurs mauvaises propriétés mécaniques, font qu'il est très difficile d'obtenir des films d'épaisseur inférieure à 30 µm à 40 µm. De tels films sont décrits par exemple dans la demande de brevet WO 2004/051769 (Avestor Ltd Parnership).

Pour améliorer les propriétés mécaniques des films polymères, des particules de céramiques, éventuellement conductrices des ions lithium, ont été ajoutées, ainsi que cela est décrit par exemple dans la demande de brevet EP 1 049 188 A1 (Ohara KK). Cependant les épaisseurs des films obtenus restent proches de 20 µm.

Pour réduire encore les épaisseurs des films, le brevet EP 1 424 743 B1 (Ohara KK) décrit le dépôt d'un film d'électrolyte directement sur la surface des électrodes. Parmi les méthodes décrites, l'une consiste à enduire la surface de l'électrode d'une encre contenant un électrolyte polymère et des particules d'électrolyte solide inorganique, conducteur des ions lithium. L'épaisseur du film d'électrolyte solide est de 3 µm environ. Les particules inorganiques ont un diamètre moyen de 150 nm. Le procédé de fabrication comporte en outre un assemblage de l'anode et de la cathode, respectivement enduites d'électrolyte, par pressage par passage dans des rouleaux.

Ainsi, les techniques de revêtement décrites ci-dessus peuvent permettre de réaliser des dépôts minces. Des dépôts d'épaisseurs microniques peuvent être déposés par impression d'une encre fluide. La fluidité des encres dépend de la teneur en extraits secs, des tailles de particules, de la nature du solvant et d'éventuels composés organiques dissous dans cette encre. La viscosité des encres augmente lorsque la concentration en particules augmente, ou que pour un extrait sec donné, la taille des particules diminue. En effet, lorsque l'on diminue la taille des particules, les interactions électrostatiques entre les surfaces des particules augmentent ce qui contribue à accroître la viscosité des encres. Par ailleurs, l'augmentation de la quantité de solvant accroît les risques de former des fissures, cavités et agglomérats dans le dépôt, pendant les phases de séchage. Les dépôts deviennent alors difficiles à compacter.

Cette étape de séchage est difficile à maitriser car les régions de plus faibles densités, c'est-à-dire comportant moins de particules, sécheront plus vite que les zones de plus fortes densités. Les effets capillaires induits par ces différences locales de niveau de séchage conduiront les zones de plus fortes densités, encore imprégnées, à se regrouper. Ceci conduit après séchage à la formation de cavité, d'agglomérats.

L'élimination de ces défauts par compaction ne peut être effectuée qu'à l'aide de l'application de très fortes pressions, d'autant plus élevées que la taille des particules est faible.

Les films polymères d'électrolyte et/ou de séparateur obtenus par ces techniques ne recouvrent que les surfaces des électrodes, les bords d'électrodes restant nus. En fonction des contraintes mécaniques, de la précision de positionnement de ces films, l'isolation diélectrique sur les bords des cellules n'est pas totalement bien réalisée. Ceci donne naissance à de petits courants de fuites qui peuvent donner lieu à un phénomène d'autodécharge, voire un court-circuit interne à la cellule.

De plus l'utilisation d'électrolytes organiques contenant des sels de lithium limite le choix des matériaux d'électrodes pouvant être utilisés, la plupart d'entre eux réagissant aux potentiels fortement réducteur ou oxydants des anodes et cathodes.

Un autre mode de réalisation de film mince d'électrolyte a été proposé. Il s'agit de déposer par voie sous vide un film mince de céramiques ou vitro céramiques conductrices des ions lithium. Le dépôt sous vide permet d'obtenir des films d'électrolyte solides et denses, sans porosités, ayant d'excellentes propriétés mécaniques et permettant d'éviter l'apparition de courts-circuits internes à la batterie. Ces films parfaitement denses, sans porosités, recouvrent en outre la totalité de l'électrode y compris ses bords. De plus dans de tels films totalement inorganiques, l'absence de porosités permet d'assurer le transport des ions lithium par diffusion à travers le film, sans avoir recours à l'utilisation d'électrolytes liquides à base de polymères ou solvant contenant des sels de lithium.

De tels films totalement inorganiques confèrent aux batteries Li-ion d'excellentes performances en vieillissement, sécurité et tenue en température.

Ainsi, les films minces et denses d'électrolyte, qu'ils soient totalement inorganiques ou non, présentent de nombreux avantages. Cependant, les techniques de dépôt sous vide sont très couteuses et difficiles à mettre en oeuvre industriellement sur de large surface, avec une productivité élevée.

Il existe enfin une dernière alternative pour le dépôt de matériaux en couches minces dans des dispositifs électrochimiques et en particulier les batteries. Il s'agit du dépôt de particules par électrophorèse.

Par exemple, le brevet US 7,662,265 (Massachusetts Institute of Technology) décrit la fabrication de dispositifs électrochimiques en couches minces (entre autres des piles) par électrophorèse, dans lequel une des électrodes (anode ou cathode) et l'électrolyte solide sont obtenus simultanément, l'autre électrode étant formée préalablement au dépôt électrophorétique. L'électrolyte solide obtenu par ce procédé est de l'oxyde de polyéthylène dopé avec du LiCIO₄.

La demande de brevet JP 2002-042792 (DENSO) décrit un procédé de dépôt d'un électrolyte solide sur une électrode d'une batterie, le dépôt étant effectué par électrophorèse. Les électrolytes visés sont essentiellement des électrolytes polymères tels que l'oxyde de polyéthylène, le polyacrylonitrile, le poly(fluorure de vinylidène), ainsi que des électrolytes inorganiques tels que le nitrure de lithium, le iodure de lithium, les phosphates de lithium, les phosphates de zirconium et lithium, les phosphates de titane et lithium. La taille des particules déposées par électrophorèse doit être inférieure de préférence à 1 µm, et la couche formée a de préférence une épaisseur inférieure à 10 µm. Aucune densification n'est effectuée après le dépôt, et un sel de lithium (LiPF₆) est imprégné dans les porosités de la batterie.

### Objet de l'invention

Un premier but de l'invention consiste à réaliser des films minces d'électrolyte pour batterie Li-ion, ne contenant pas de défauts, de porosités, et pouvant recouvrir des surfaces tridimensionnelles et permettant d'éviter les risques de courts-circuits internes, d'autodécharge.

Un second but de l'invention est de réaliser un film contenant uniquement des composés céramiques ou vitrocéramiques conducteurs des ions lithium, afin d'accroître la résistance en température de la batterie, de limiter les pertes de durée de vie par oxydation des électrolytes, les risques de combustion interne à la batterie et ce film totalement inorganique permet également d'utiliser des matériaux plus énergétiques, c'est-à-dire capables de fonctionner à des potentiels relativement élevés, et par conséquent de stocker plus d'énergie (l'énergie étant la capacité x le potentiel).

Un autre but de l'invention est de fabriquer des films minces d'électrolyte pour batterie Li-ion industriellement, à grande échelle, et sur de grandes surfaces à moindre cout.

Un autre but de l'invention est de réaliser des couches minces de grande précision géométrique, avec une très faible quantité de défauts et avec des vitesses de dépôt élevées, pouvant servir à la réalisation de films d'électrolyte pour batteries.

Ces buts sont atteints grâce à un procédé de fabrication d'une couche mince d'électrolyte solide dans une microbatterie en couches minces entièrement solide comprenant les étapes de :
a) Approvisionnement d'une couche de substrat éventuellement conducteur, éventuellement recouvert d'une couche d'anode ou de cathode,
b) Dépôt d'une couche mince d'électrolyte par électrophorèse, à partir d'une suspension de particules de matériau d'électrolyte, sur ledit substrat et/ou ladite couche d'anode ou de cathode préalablement formée,
c) Séchage de la couche ainsi obtenue,
d) Densification de la couche mince d'électrolyte obtenue à l'étape précédente par compression mécanique et/ou traitement thermique.

La taille moyenne D₅₀ des particules de matériau d'électrolyte solide est inférieure à 100 nm et plus préférentiellement inférieure ou égale à 30 nm. Ceci permet de réduire la température de densification.

Dans un mode de réalisation, les particules d'électrolyte sont constituées d'au moins un matériau inorganique. Ceci permet d'obtenir des films d'électrolyte solides denses, sans porosités, ayant d'excellentes propriétés mécaniques, et d'assurer le transport des ions lithium par diffusion à travers le film. De préférence, les matériaux sont sélectionné dans le groupe formé par :
(i) les composés lithiés à base d'oxynitrure de lithium et de phosphore (appelés LiPON) sous forme LiₓPO_{y}N_{z} avec x ∼2,8 et 2y+3z ∼7,8 et 0,16 ≤ z ≤ 0,4, et en particulier le Li_{2,9}PO_{3,3}N_{O,46}, mais également toutes les variantes sous forme Li_{w}POₓN_{y}S_{z} avec 2x+3y+2z = 5=w et 3,2 ≤ x ≤ 3,8, 0,13 ≤ y ≤ 0,4, 0 ≤ z ≤ 0,2, 2,9 ≤ w ≤ 3,3 ou sous forme LiₜPₓAl_{y}OᵤNᵥS_{w} avec 5x+3y=5, 2u+3v+2w=5+t, 2,9≤t≤3,3, 0,94≤x≤0,84, 0,094≤y≤0,26, 3,2≤u≤3,8, 0,13≤v≤0,46, 0≤w≤0,2.
(ii) les composé lithiés à base d'oxynitrure de lithium, de phosphore et de silicium (appelés LiSiPON), et en particulier le Li_{1.9}Si_{0.28}P_{1.0}O_{1.1}N_{1.0} ;
(iii) les oxynitrures de lithium de types LiBON, LiBSO, LiSiPON, LiSON, thio-LiSiCON, LiPONB (ou B, P et S représentent respectivement le bore, le phosphore et le soufre);
(iv) les composés La_{0,51}Li_{0,34}Ti_{2,94}, Li₃,₄V_{0,4}Ge_{0,6}O₄, Li₂O-Nb₂O₅, LiAlGaSPO₄ ;
(v) les formulations à base de Li₄SiO₄, Li₃PO₄, Li₂CO₃, B₂O₃, Li₂O, Al(PO₃)₃LiF, P₂S₃, Li₂S, Li₃N, Li₁₄Zn(GeO₄)₄, Li_{3,6}Ge_{0,6}V_{0,4}O₄, LiTi₂(PO₄)₃, Li_{0,35}La_{0,55}TiO₃, Li_{3,25}Ge_{0,25}P_{0,25}S₄, Li_{1,3}Al_{0,3}Ti_{1,7}(PO₄)₃, Li₁₊ₓAlₓM₂₋ₓ(PO₄)₃ (où M = Ge, Ti, et/ou Hf, et où 0 < x < 1), Li_{1+x+y}AlₓTi₂₋ₓSi_{y}P₃₋yO₁₂ (où 0≤x≤1 et 0≤y≤1), Li_{1-x+z}Mₓ(Ge_{1-y}Ti_{y})₂-ₓSi_{z}P_{3-z}O₁₂ (où 0 ≤ x ≤0,8 ; 0 ≤ y ≤ 1,0 ; 0 ≤ z ≤ 0,6), et en particulier les formulations 4,9LiI-34,1Li₂O-61B₂O₃, 0,30Li₂S-0,26B₂S₃-0,44LiI, 60Li₂S-40SiS₂, 0,02Li₃PO₄-0,98(Li₂S-SiS₂), 2(Li_{1,4}Ti₂Si_{0,4}P_{2,6}O₁₂)-AlPO₄, 0,7Li₂S-0,3P₂S₅.

Dans un autre mode de réalisation, les particules d'électrolyte sont constituées d'au moins un polymère imprégné d'un sel de lithium, le polymère étant de préférence choisi dans le groupe formé par le polyéthylène oxyde, les polyimides, le polyfluorure de vinylidène, le polyacrylonitrile, le polyméthacrylate de méthyle, les polysiloxanes, et le sel de lithium étant de préférence choisi parmi LiCl, LiBr, LiI, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆H₅)₄), Li(SCN), Li(NO₃).

Dans encore un autre mode de réalisation, les particules de matériau d'électrolyte sont constituées d'un mélange de particules inorganiques et de particules organiques.

Dans un autre mode de réalisation, l'étape dite de densification est une étape de compaction mécanique par application d'une pression comprise entre 20 MPa et 100 MPa, de préférence entre 40 et 60 MPa.

Dans un mode de réalisation, l'étape dite de densification est une étape de densification thermique à une température T_{R} qui ne dépasse pas 0,7 fois la température de fusion (exprimée en °C), plus préférentiellement ne dépasse pas 0,5 fois la température de fusion (exprimée en °C), et encore plus préférentiellement ne dépasse par 0,3 fois la température de fusion (exprimée en °C) du matériau d'électrolyte le plus fusible, afin de pouvoir utiliser des substrats conducteurs à bas point de fusion.

Le terme « température de fusion » inclut ici la température de décomposition pour le cas des substances qui n'ont pas de point de fusion.

Dans un autre mode de réalisation, l'étape de densification comporte une étape d'application d'une pression comprise entre 20 et 100 MPa, suivie d'une étape de traitement thermique à une température T_{R} qui ne dépasse pas 0,7 fois la température de fusion (exprimée en °C), plus préférentiellement ne dépasse pas 0,5 fois la température de fusion (exprimée en °C), et encore plus préférentiellement ne dépasse par 0,3 fois la température de fusion (exprimée en °C) du matériau d'électrolyte le plus fusible.

Dans un autre mode de réalisation, l'étape de densification comporte un recuit à une température T_{R} qui ne dépasse pas 0,7 fois la température de fusion (exprimée en °C), plus préférentiellement ne dépasse pas 0,5 fois la température de fusion (exprimée en °C), et encore plus préférentiellement ne dépasse par 0,3 fois la température de fusion (exprimée en °C) du matériau d'électrolyte le plus fusible, suivi de l'application d'une pression comprise entre 20 et 100 MPa, et de préférence comprise entre 40 et 60 MPa.

Dans encore un autre mode de réalisation, l'étape dite de densification est une étape de traitement thermique sous pression, à une température T_{R} qui ne dépasse pas 0,7 fois la température de fusion (exprimée en °C), plus préférentiellement ne dépasse pas 0,5 fois la température de fusion (exprimée en °C), et encore plus préférentiellement ne dépasse par 0,3 fois la température de fusion (exprimée en °C) du matériau d'électrolyte le plus fusible, et à une pression de préférence comprise entre 20 et 100 MPa.

La combinaison de l'application d'une pression et d'un traitement thermique permet de réaliser le traitement thermique à des températures plus basses que s'il est effectué seul, et/ou de réaliser la compaction mécanique à des pressions plus faibles que si elle est effectuée seule.

Avantageusement, l'étape de densification d) est réalisée sous vide ou sous atmosphère inerte (par exemple sous argon) afin d'éviter l'oxydation du substrat métallique.

Dans un mode de réalisation, le potentiel zêta de la suspension de particules de matériau d'électrolyte est supérieur à 40 mV, et de préférence supérieur à 60 mV. De telles suspensions sont très stables et comprennent peu d'agglomérats de particules, permettant de ce fait des dépôts comportant peu de défauts.

La suspension de particules de matériau d'électrolyte peut contenir en outre un stabilisant stérique ou, de préférence, électrostatique. Dans certains cas, ce stabilisant permet d'améliorer la stabilité de la suspension, et par conséquent la qualité du film déposé.

On préfère toutefois les suspensions stables de particules de matériau d'électrolyte ne contenant pas de stabilisant. Ces suspensions sont obtenues pour des extraits sec compris entre 2 et 20 g/L, de préférence entre 3 et 10 g/L, et plus particulièrement de l'ordre de 4 g/L. Dans ces suspensions, la taille des particules est en outre de préférence inférieure à 100 nm, et encore plus préférentiellement inférieure à 50 nm. Dans ce cas, le potentiel Zêta de la suspension est généralement inférieure à 40 mV, et plus particulièrement compris entre 25 et 40 mV. La couche mince d'électrolyte déposée a une épaisseur inférieure à 5 µm, et plus préférentiellement 2 µm. Dans un autre mode de réalisation, la couche d'électrolyte déposée à l'étape b) recouvre également les bords de ladite couche d'anode ou de cathode préalablement formée. Cela permet d'améliorer la résistance aux courts-circuits à l'autodécharge de la batterie comprenant la couche d'électrolyte ainsi déposée.

Un autre but de l'invention est de fabriquer des batteries Li-ion entièrement solides comprenant le film d'électrolyte solide obtenu par le procédé ci-dessus.

Ce but est atteint grâce à un procédé de fabrication d'une batterie entièrement solide mettant en oeuvre ce procédé et comprenant les étapes de :
a) Approvisionnement d'une suspension colloïdale de particules conductrices des ions lithium, dite de « matériaux d'électrolyte solide »;
b) Approvisionnement de deux substrats conducteurs plats, de préférence métalliques, lesdits substrats conducteurs pouvant servir comme collecteurs de courant de la batterie, et étant éventuellement recouverts sur au moins une partie d'au moins une de leurs faces d'une couche de cathode, respectivement d'anode,
c) Dépôt d'une couche mince d'électrolyte par électrophorèse, à partir d'une suspension de particules de matériau d'électrolyte, sur ladite couche d'anode et/ou ladite couche de cathode et/ou ledit substrat obtenus à l'étape b),
d) Séchage de la couche ainsi obtenue,
e) Assemblage soit :
   - de l'empilement substrat/cathode/électrolyte obtenu à l'étape c) et soit de l'empilement substrat/anode obtenu à l'étape a) soit de l'empilement substrat/anode/électrolyte obtenu à l'étape c) pour obtenir une batterie de structure empilée « collecteur / anode / électrolyte / cathode / collecteur »,
   - de l'empilement substrat/anode/électrolyte obtenu à l'étape c) et soit de l'empilement substrat/cathode obtenu à l'étape a) soit de l'empilement substrat/cathode/électrolyte obtenu à l'étape c) pour obtenir une batterie de structure empilée « collecteur / anode / électrolyte / cathode / collecteur ».
f) Densification de la couche mince d'électrolyte obtenue à l'étape précédente par compression mécanique et/ou traitement thermique.

### Description des figures

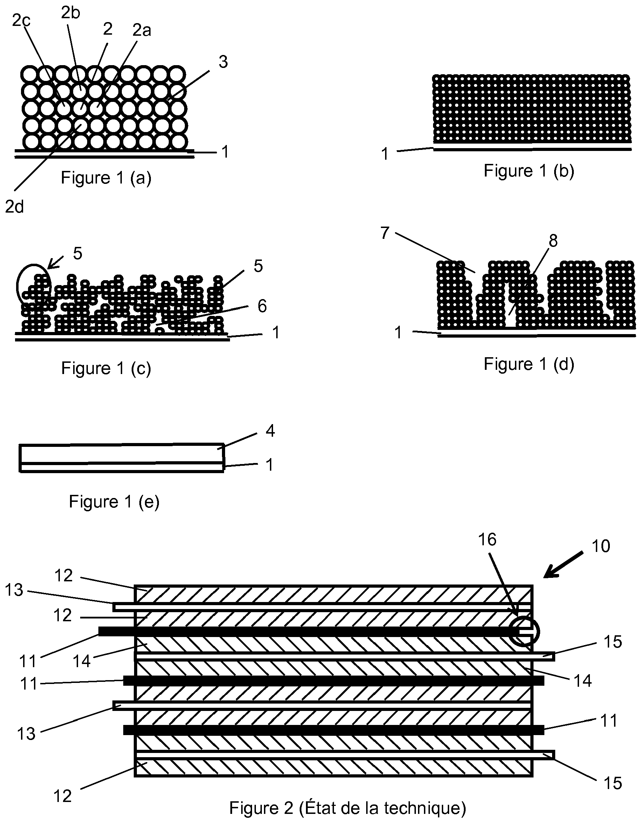

Les figures 1(a),(b),(c) et (d) montrent de manière schématique des couches formées par empilement de particules de forme approximativement isotrope. La figure 1(e) montre un film déposé par PVD sur un substrat.
La figure 1(a) montre de manière schématique un dépôt compact de particules 2 sur un substrat **1.** Toutes les particules **2** sont en contact avec leurs premiers voisins **2a, 2b, 2c, 2d.** Les porosités **3** se situent entre les particules **2.** Sur cette figure (ainsi que sur les figures 1(b), 1(c) et 1(d)), on a volontairement représenté un empilement moins dense que l'empilement hexagonal compact, afin de rendre mieux visible les porosités **3** entre les particules **2.**
La figure 1(b) montre de manière schématique un dépôt compact de particules **2** tel qu'il peut être obtenu en utilisant le procédé selon l'invention.
La figure 1(c) montre un dépôt de particules **2** sur un substrat, le dépôt présentant des défauts. Ces défauts sont essentiellement des cavités **6** liées à la présence d'agglomérats **5 ;** ces cavités **6** représentent donc une porosité inter-agglomérat, contrairement à la porosité intra-agglomérat **3** qui se situe à une échelle géométrique beaucoup plus fine. Dans le cas d'un dépôt par le procédé selon l'invention, ces agglomérats **5** se forment lorsque la suspension utilisée n'est pas suffisamment stable.
La figure 1(d) montre un dépôt de particules avec des fissures apparues après séchage ; ces fissures peuvent être des fissures ouvertes (débouchantes) **7** ou des fissures internes (non débouchantes) **8.**
La figure 1(e) illustre un dépôt dense **4** tel qu'il peut être obtenu par des techniques de type PVD ; la porosité de ces dépôts denses est proche de 0% car ils ne sont pas formées par empilement de particules.
La figure 2 illustre de manière schématique un empilement ou enroulement **10** d'électrodes de batterie entre lesquelles est positionné un séparateur **11** dans des batteries de l'état de la technique. Plus précisément, chaque cathode **12** et chaque anode **14** est reliée à son collecteur cathodique **13** et anodique **15,** respectivement, et chaque cathode **12** est séparée de son anode **14** par un séparateur **11** qui assure la fonction de transport des ions lithium via ses porosités imprégnées d'électrolyte, et d'isolation électrique entre les électrodes. Si le séparateur **11** est mal positionné entre les électrodes **12** et **14** (par exemple suite à un défaut de positionnement, une vibration, un choc lors de la fabrication), alors un court-circuit (ou un courant de fuite) peut apparaître entre les électrodes **12,14** dans le défaut **16** sur le bord de électrodes.
Les figures 3(a), 3(b), 3(c) et 3(d) avec la figure 4 montrent les produits obtenus à quatre étapes d'un mode de réalisation particulier du procédé selon l'invention.
Les figures 5a, 5b, montrent les produits obtenus à différents étapes d'un mode de réalisation particulier du procédé selon l'invention.
Les figures 6a, 6b montrent les produits obtenus à différents étapes d'un mode de réalisation particulier du procédé selon l'invention.
Les figures 7a, 7b, montrent les produits obtenus à différents étapes d'un mode de réalisation particulier du procédé selon l'invention.
Les figures 8a, 8b, montrent les produits obtenus à différents étapes d'un autre mode de réalisation particulier du procédé selon l'invention, dans lequel le substrat sur lequel on dépose les électrodes est une plaque de polymère comportant des zones métallisées.
Les diagrammes des figures 9 et 13 présentent des modes de réalisation typiques du procédé selon l'invention.
Les figures 10a et 10b représentent de manière schématique des dispositifs pour la mise en oeuvre du procédé selon l'invention.
La figure 11 illustre le principe de fonctionnement des dépôts par électrophorèse
La figure 12 est une représentation schématique d'un dépôt de nanoparticules de deux tailles différentes.
Les figures 14a, 14b, 14c représentent des chemins de diffusion du lithium dans différentes configurations d'assemblages de particules. La figure 14d représente l'évolution de la porosité en fonction de la densité du dépôt.
La figure 15 représente un diagramme DLS montrant la distribution de taille de nanoparticules d'électrolyte dans une suspension utilisée pour le dépôt électrophorétique d'une couche d'électrolyte.

**Liste de références**

| | |
|---|---|
| 1 | Substrat |
| 2,2a,2b,2c,2d | Particules |
| 3 | Pore |
| 4 | Film obtenu par dépôt PVD |
| 5 | Agglomérat |
| 6 | Cavité |
| 7 | Fissure débouchante |
| 8 | Fissure non débouchante |
| 10 | Batterie selon l'étant de la technique |
| 11 | Séparateur |
| 12 | Cathode |
| 13 | Collecteur de cathode |
| 14 | Anode |
| 15 | Collecteur d'anode |
| 16 | Défaut |
| 17 | Particules de taille inférieure à celle des particules 2 |
| 20 | Substrat |
| 21 | Anode |
| 22,22a,22b | Électrolyte |
| 23,23a,23b | Bord sectionné |
| 24 | Cathode |
| 25 | Liaison entre deux couches d'électrolyte |
| 26 | Alimentation électrique |
| 27 | Contre-électrodes pour dépôt par électrophorèse |
| 28 | Dépôt |
| 29 | Suspension colloïdale |
| 30 | Particules |
| 35,36 | Contacts électriques |
| 41 | Dérouleur |
| 42 | Suspension colloïdale |
| 43 | Contre-électrode |
| 44 | Substrat métallique |
| 45 | Four de séchage |
| 46 | Dispositif de densification mécanique |
| 47 | Séchage du substrat revêtu du film déposé par électrophorèse |
| 50 | Tranche du substrat |
| 63 | Couche de cathode |
| 65 | Substrat isolant |
| 66 | Couche d'électrolyte |
| 67 | Couche d'anode |
| 68a, 68b | Films métalliques sur substrat isolant 65 |
| 76 | Zone de contact surfacique entre les particules et l'électrolyte contenu dans les porosités (chemin de diffusion peu résistif) |
| 77 | Zone de contact ponctuel entre les particules (la diffusion du lithium étant limitée sur ce contact ponctuel) |
| 78 | Soudure des particules durant la densification ayant donné lieu à l'apparition de chemins de diffusion dans le solide, pour le transport des charges électriques (électrons et ions) |
| 79 | Phase fusible ayant consolidé les particules entre elles |

### Description de l'invention

Dans le cadre de la présente invention, on entend par « dépôt électrophorétique » ou « dépôt par électrophorèse » une couche déposée par un procédé de dépôt de particules électriquement chargées en surface, préalablement mises en suspension dans un milieu liquide, sur un substrat, le déplacement des particules vers la surface du substrat étant généré par l'application d'un champ électrique entre deux électrodes placées dans la suspension, l'une des électrodes constituant le substrat conducteur sur lequel le dépôt est effectué, l'autre électrode (« contre-électrode ») étant posé dans la phase liquide. Un dépôt compact de particules se forme sur le substrat, si le potentiel zêta présente une valeur appropriée comme il sera expliqué ci-dessous.

Dans le cadre du présent document, la taille d'une particule est sa plus grande dimension. Ainsi, une « nanoparticule » est une particule dont au moins une des dimensions est inférieure à 100 nm. La « taille de particules » ou « taille moyenne de particules » d'une poudre ou d'un ensemble des particules est donnée en D₅₀.

Le « potentiel zêta » d'une suspension est défini comme la différence de potentiel existant entre le sein de la solution, et le plan de cisaillement d'une particule de la suspension. Il est représentatif de la stabilité d'une suspension. Le plan de cisaillement (ou rayon hydrodynamique) correspond à une sphère imaginaire autour de la particule dans laquelle le solvant bouge avec la particule lorsque les particules se déplacent dans la solution.

La base théorique et la détermination du potentiel zêta sont connues de l'électrochimiste qui développe des dépôts par électrophorèse ; il peut être déduit de la mobilité électrophorétique. Pour la mesure directe du potentiel zêta, il existe différentes techniques et dispositifs commercialisés. Lorsque l'extrait sec est faible, on peut mesurer le potentiel zêta à l'aide d'un équipement de type Zetasizer Nano ZS de la société Malvern. Cet équipement mesure à l'aide de dispositifs optiques les vitesses de déplacement des particules en fonction du champ électrique qui leur est appliquée. Aussi, il faut que la solution soit très diluée pour permettre le passage de la lumière. Lorsque l'extrait sec est plus important, il est possible de mesurer le potentiel zêta à l'aide de techniques d'acoustophorèse, en utilisant par exemple un dispositif appelé « acoustosizer » de la société Colloidal Dynamics. La vitesse des particules est alors mesurée par des techniques acoustiques.

On entend par « dispersant » un composé apte à stabiliser la suspension colloïdale et notamment à éviter que les particules ne s'agglomèrent.

On entend par « frittage » un processus faisant évoluer par traitement thermique un système constitué de particules individuelles (ou un aggloméré poreux), en l'absence de pression externe exercée ou sous l'effet d'une telle pression, de sorte qu'au moins certaines des propriétés du système (sinon toutes) soient modifiées dans le sens d'une réduction de l'énergie libre globale du système. Parallèlement, cette évolution entraîne une diminution importante (sinon complète) de la porosité initiale. Enfin, le processus suppose qu'au moins une phase solide existe constamment pendant tout le traitement thermique, de façon à conserver une certaine stabilité de forme et de dimension au système considéré.

Le procédé selon l'invention comprend l'étape essentielle de dépôt électrophorétique de particules de matériaux d'électrolyte solide. Un tel procédé permet de réduire de manière significative la quantité de défauts dans les couches obtenues par rapport aux procédés connus, notamment les grandes porosités, cavités, craquelures et agglomérats ; la qualité des couches déposées est meilleure lorsque la suspension à partir de laquelle le dépôt est effectué est suffisamment stable.

Le procédé selon l'invention permet le dépôt de couches minces d'électrolyte. On entend par « couches minces » des couches qui ont une épaisseur généralement inférieure à environ 10 µm, de préférence inférieure à environ 5 µm, et encore plus préférentiellement inférieure à 2 µm.

Le procédé de dépôt en couches minces d'électrolytes solides selon la présente invention présente une alternative avantageuse aux techniques connues, et particulièrement aux techniques de dépôt PVD, en permettant de faire des dépôts très denses, à basse température, sur de grandes surfaces de substrat, avec des vitesses de dépôt élevées, des épaisseurs contrôlables facilement et de manière très précise (en fonction de la taille des particules), sur un large intervalle d'épaisseur pouvant aller du dixième de micron à plusieurs dizaines voire centaines de microns, sans induire d'investissements très couteux dans des machines complexes et peu productives.

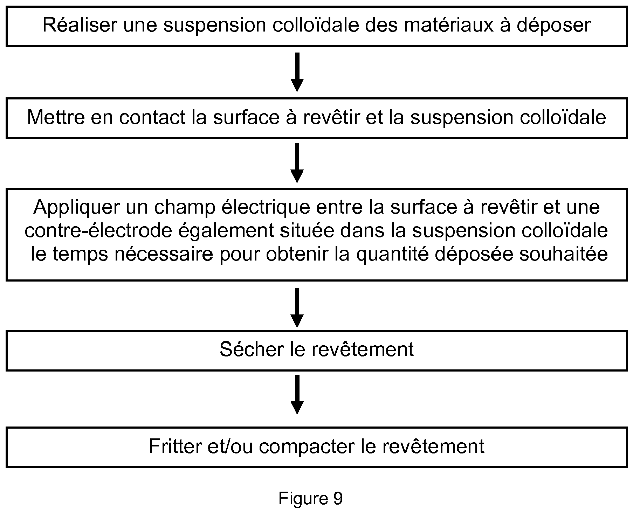

Le diagramme de la figure 9 présente un mode de réalisation typique du procédé selon l'invention :
1° étape: Préparation des suspensions. On utilise des poudres de la composition chimique du revêtement (de la couche mince) que l'on souhaite déposer.
2° étape : Immersion d'un substrat, éventuellement préalablement recouvert d'une couche de matériau d'électrode (anode ou cathode) dans la suspension colloïdale. La suspension colloïdale peut recouvrir la totalité de la surface du substrat. Dans un mode de réalisation particulier, un masque peut être appliqué sur la surface du substrat de manière à limiter la surface en contact de la suspension et par voie de conséquence réduire la surface de dépôt.
   Dans un mode de réalisation particulier, la couche d'électrolyte est déposée directement sur un substrat conducteur. L'anode (en lithium) se forme lors de la première charge de la batterie.
3° étape : Application d'un champ électrique entre le substrat et une contre-électrode située dans la suspension colloïdale. Ce champ électrique peut être constant et / ou variable (alternatif). Le sens du champ électrique, c'est-à-dire du potentiel appliqué aux électrodes est adapté à la charge de la particule à déposer (cataphorèse ou anapohorèse).
4° étape : Séchage. Les conditions de séchage dépendent de l'épaisseur déposée ainsi que de la nature du solvant.
   Il est possible d'effectuer une étape de densification mécanique sur la couche humide avant séchage, par exemple par calandrage ou compression statique ; cela peut permettre d'améliorer la qualité de la couche, mais ne remplace pas la densification à sec.
5° étape : Densification. La densification est réalisée par densification mécanique et/ou traitement thermique.

Nous décrivons ci-dessous en détail chacune des étapes du procédé selon l'invention.

### Préparation des suspensions

De manière à avoir un dépôt parfaitement homogène en épaisseur, sans rugosité, et avec peu de défauts et le plus compact possible à l'issue du procédé de dépôt par électrophorèse, le dépôt est préférentiellement réalisé à partir de suspensions colloïdales très stables. Cela permet de minimiser la formation de pores, cavités et amas préjudiciables à la densification du dépôt. La stabilité des suspensions dépend de la taille des particules, de l'extrait sec ainsi que de la nature du solvant utilisé et éventuellement du stabilisant ayant servi à stabiliser la suspension colloïdale.

La stabilité des suspensions peut être exprimée par leur potentiel zêta. Dans le cadre de la présente invention, la suspension est considérée comme stable lorsque son potentiel zêta est supérieur à 40 mV, et très stable lorsqu'il est supérieur à 60 mV. En revanche, lorsque le potentiel zêta est inférieur à 20 mV, des agglomérats de particules peuvent apparaitre. Aussi, pour garantir la bonne compacité du film mince, dans certains modes de réalisation, les dépôts sont réalisés à partir de suspensions colloïdales ayant un potentiel zêta supérieur à 40 mV, et encore plus préférentiellement 60 mV (en valeur absolue). Cependant dans d'autres modes de réalisation préférés dans le cadre de la présente invention, les suspensions ont de faibles extraits secs en particules et le potentiel Zêta est inférieur à 40 mV, ainsi que cela est décrit plus en détail ci-après.

Afin de faciliter la densification thermique du dépôt et garantir la possibilité de faire des dépôts en couches minces avec des épaisseurs et des profils (rugosité) très précis, les suspensions colloïdales doivent contenir des particules de tailles nanométriques. Si plusieurs matériaux sont présents dans ladite suspension colloïdale, il est préféré qu'ils soient tous présent sous la forme de nanoparticules. Ces particules ont de préférence une taille de particules moyenne D₅₀ inférieure à 100 nm, et plus préférentiellement inférieure à 30 nm. En effet, avec des particules de faibles dimensions, la densification thermique du dépôt est grandement facilitée dès lors que le dépôt est compact. La densification mécanique peut être plus difficile, mais les inventeurs ont trouvé que la conjonction entre une densification mécanique et une densification thermique conduit à la solution du problème.

Les suspensions colloïdales destinées à être utilisées en électrophorèse comportent un solvant isolant électrique, qui peut être un solvant organique, ou de l'eau déminéralisée, ou un mélange de solvants, et des particules à déposer ; les suspensions colloïdales peuvent également comporter un ou plusieurs stabilisants. Dans une suspension stable, les particules ne s'agglomèrent pas entre elles pour créer des amas susceptibles d'induire des cavités, agglomérats et/ou défauts importants dans le dépôt. Les particules restent isolées dans la suspension.

Aussi, dans un mode de réalisation de la présente invention, la stabilité de la suspension nécessaire à l'obtention d'un dépôt compact est obtenue grâce à l'ajout de stabilisants. Le stabilisant permet d'éviter la floculation des poudres et la formation d'agglomérats. Il peut agir par un effet électrostatique ou par un effet stérique. La stabilisation électrostatique est basée sur les interactions électrostatiques entre des charges et est obtenue par la distribution d'espèces chargées à la surface des particules. La stabilisation électrostatique est contrôlée par la nature des charges de surface; elle peut par conséquent dépendre du pH. La stabilisation stérique met en oeuvre des polymères, tensio-actifs non ioniques voire des protéines, qui, ajoutés à la suspension, viennent s'adsorber à la surface des particules pour causer la répulsion par encombrement de l'espace inter-particulaire. Une combinaison des deux mécanismes de stabilisation est également possible. Dans le cadre de la présente invention, on préfère la stabilisation électrostatique qui est facile à mettre en oeuvre, réversible, peu onéreuse, et qui facilite les processus ultérieurs de consolidation.

Cependant les inventeurs ont constaté qu'avec les nanoparticules des matériaux d'électrolyte utilisés dans le cadre de la présente invention, il est possible d'obtenir des suspensions colloïdales stables de particules non agglomérées entre elles et/ou d'agglomérats de quelques particules, sans ajouts de stabilisants. Les particules et/ou agglomérats ont de préférence une taille inférieure à 100 nm, et plus préférentiellement inférieure à 50 nm.

Ces suspensions ont été obtenues pour de faibles extraits secs, compris entre 2 g/L et 20 g/L, de préférence entre 3 et 10 g/L, et plus particulièrement pour des extraits secs de l'ordre de 4g/l, dans un solvant organique de type alcool et/ou cétone. Ces suspensions colloïdales stables de particules sans ajout de stabilisant sont particulièrement préférées dans le cadre de la présente invention.

Le potentiel Zêta de telles suspensions est généralement inférieur à 40 mV, et plus particulièrement compris entre 25 et 40 mV. Cela pourrait signifier que de telles suspensions tendent à être instables, cependant les inventeurs ont constaté que l'emploi de ces suspensions pour le dépôt électrophorétique conduisait à des films déposés très bonne qualité.

Dans ces suspensions les nanoparticules sont généralement chargées négativement, elles sont donc compatibles des dépôts en anaphorèse.

L'ajout de stabilisants ou de cations dans de telles suspensions pour modifier la charge de surface des nanoparticules afin de les rendre compatibles de polarisations cataphorétiques conduirait à polluer les dépôts, pire, des stabilisants organiques, peu volatiles pourraient conduire à isoler électriquement les nanoparticules interdisant ainsi toute réponse électrochimique.

Lorsque l'eau est utilisée comme solvant, des tensions de dépôt inférieures à 5 V doivent être privilégiées, car au-dessus de 5 V l'eau risque de subir une électrolyse donnant lieu à des productions de gaz sur les électrodes qui rendent les dépôts poreux et diminuent leur adhérence sur le substrat. Par ailleurs, les réactions galvaniques en milieu aqueux donnent lieu à la formation de cations métalliques susceptibles de polluer les dépôts. Dans un mode de réalisation préféré, les dépôts se font en phase solvantée. Il est ainsi possible de travailler à des valeurs de tension plus élevées, augmentant ainsi les vitesses de dépôts.

Pour préparer un film mince d'électrolyte dans une batterie Li-ion, sachant que ce film doit être un bon conducteur ionique mais un isolant électrique, les nanoparticules utilisées peuvent être choisies avantageusement et de manière non exhaustive parmi un ou plusieurs des matériaux suivants (toutes les compositions étant molaires) : LiPON (composé lithié d'oxynitrure de phosphore : Li_{2,9}PO_{3,3}N_{0,46}), LiSiPON (composé lithié d'oxynitrure de phosphore et de silicium : Li_{1.9}Si_{0.28}P_{1.0}O_{1.1}N_{1.0}), ou des formulations à base de Li₄SiO₄, Li₃PO₄, Li₂CO₃, B₂O₃, Li₂O, Al(PO₃)₃LiF, P₂S₃, Li₂S, Li₃N, Li₁₄Zn(GeO₄)₄, 4,9Lil-34,1 Li₂O-61 B₂O₃, Li_{3,6}Ge_{0,6}V_{0,4}O₄, 0,30Li₂S-0,26B₂S₃-0,44Lil, LiTi₂(PO₄)₃, 60Li₂S-40SiS₂, Li_{1,3}Al_{0,3}Ti_{1,7}(PO₄)_{3,} 0,02Li₃PO₄-0,98(Li₂S-SiS₂), Li_{0,35}La_{0,55}TiO₃, 2(Li_{1,4}Ti₂Si_{0,4}P_{2,6}O₁₂)-AlPO₄, Li_{3,25}Ge_{0,25}P_{0,25}S₄, 0,7Li₂S-0,3P₂S₅, Li₁₊ₓAlₓM₂₋ₓ(PO₄)₃. avec M=Ge, Ti, Hf et 0<x<1, Li_{1+x,y}AlₓTi₂₋ₓSi_{y}P_{3-y}O₁₂, Li_{1+x+z}Mₓ(Ge_{1-y}Ti_{y})₂₋ₓSi_{z}P_{3-z}O₁₂, (0=<x=<0,8 ; 0=<y=<1,0 ; 0=<z=<0,6), LiBON, LiBSO, LiSiPON, LiSON, thio,LiSiCON, La_{0,5}1Li_{0,34}TiO_{2,94}, Li_{3,4}V_{0,4}Ge_{0,6}O₄, Li₂O-Nb₂O₅, LiPONB, LiAlGaSPO₄, des polymères, appartenant notamment aux familles suivantes : polyimide, PVDF, PEO (polyéthylène oxyde), polyméthacrylate, polysiloxane, imprégnés d'un sel de lithium. Ces sels de lithium peuvent être LiCl, LiBr, Lil, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆H₅)₄), Li(SCN), Li(NO₃).

### Dépôt de la couche d'électrolyte :

Selon l'invention, la couche mince dense d'électrolyte solide est déposée par voie électrophorétique. Le dépôt électrophorétique de particules se fait par l'application d'un champ électrique entre le substrat sur lequel est réalisé le dépôt, et une contre-électrode, permettant de mettre les particules chargées de la suspension colloïdale en mouvement, et de les déposer sur le substrat. L'absence de liants et d'autres solvants déposés en surface avec les particules permet d'obtenir des dépôts très compacts. La compacité obtenue grâce au dépôt électrophorétique, et l'absence de composés organiques en grande quantité dans le dépôt permet de limiter voire d'éviter les risques de craquelures ou d'apparition d'autres défauts dans le dépôt pendant les étapes de séchage. On peut effectuer une compaction mécanique, par exemple par pressage, avant le séchage pour améliorer la qualité de la couche ; cela ne remplace pas la densification mécanique après séchage dont l'effet est différent.

D'autre part, du fait que le dépôt obtenu par électrophorèse ne contient pas de liants, ou d'autres composés organiques, le procédé selon la présente invention ne nécessite pas d'étapes de brulage, ou d'évaporation de composés corrosifs ou nocifs. Or, l'accroissement des contraintes économiques et environnementales impose de réduire les rejets dans l'atmosphère, ainsi la présente invention répond bien à ces contraintes.

De plus la vitesse de dépôt peut être très élevée en fonction du champ électrique appliqué et de la mobilité électrophorétique des particules de la suspension. Pour une tension appliquée de 200 V, la vitesse de dépôt peut atteindre environ 10 µm/min.

L'inventeur a constaté que cette technique permet de réaliser des dépôts sur de très larges surfaces avec une excellente homogénéité (sous réserve que les concentrations en particules et champs électriques soient homogènes sur la surface du substrat). Elle se prête aussi bien à un procédé continu en bande, que dans un procédé en batch sur des plaques.

La couche d'électrolyte solide est déposée sur une couche d'anode et/ou une couche de cathode elles-mêmes formées sur un substrat conducteur par un procédé approprié, et/ou directement sur un substrat métallique. Lorsque le film d'électrolyte est déposé directement sur le substrat conducteur, l'anode est alors formée par électrodéposition du lithium entre le substrat et le film d'électrolyte durant la première charge de la batterie. A titre d'exemple, on peut utiliser pour le substrat conducteur un feuillard de cuivre ou d'aluminium, d'une épaisseur qui peut être par exemple de 6 µm, ou une bande polymère présentant un dépôt de surface électriquement conducteur. Le dépôt des couches d'anode et de cathode peut être effectué par électrophorèse, ou par encrage ou par dépôt sous vide.

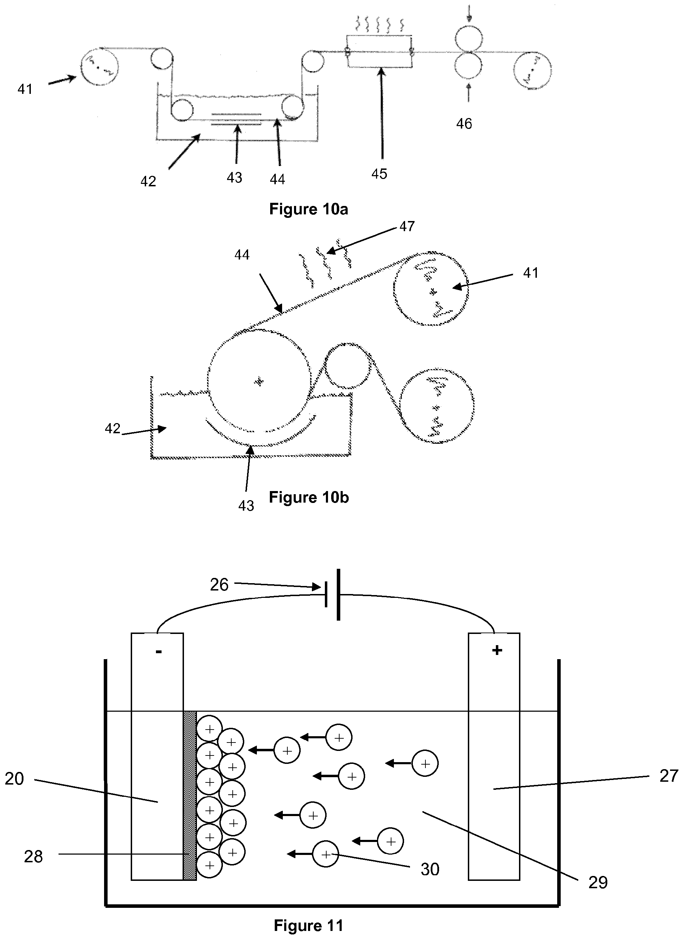

Le dépôt par électrophorèse peut être mis en oeuvre dans un procédé de type « batch » (statique) ou dans un procédé continu. Les figures 10a et 10b illustrent différents modes de réalisation de dépôts par électrophorèse, pour réaliser des dépôts sur une face ou deux faces d'un substrat.

Lors du dépôt électrophorétique, une alimentation stabilisée permet d'appliquer une tension entre le substrat conducteur et deux électrodes situées de part et autre de ce substrat. Cette tension peut être continue ou alternative. Un suivi précis des courants obtenus permet de suivre et de contrôler précisément les épaisseurs déposées. Lorsque les couches déposées sont isolantes, en fonction de leur épaisseur, elles peuvent affecter la valeur du champ électrique, aussi, dans ce cas, on privilégie un mode de dépôt en courant contrôlé. En fonction de la résistivité de l'interface, la valeur du champ électrique est modifiée.

La figure 10a montre de manière schématique une installation pour mettre en oeuvre le procédé selon l'invention. L'alimentation électrique située entre les contre-électrodes **43** et le substrat conducteur **44** n'est pas représentée. On applique un champ électrique entre les deux contre-électrodes **43** et le substrat **44** pour déposer des particules de la suspension colloïdale **42** sur les deux faces du substrat **44.**

Le bobineau de feuillard (bande) conducteur électrique **44** servant de substrat est déroulé à partir d'un dérouleur **41.** Après le dépôt la couche déposée est séchée dans un four de séchage **45** puis consolidé par compaction mécanique à l'aide d'un moyen de compaction **46** approprié. La densification peut être réalisée sous atmosphère contrôlée et pour des températures comprises entre la température ambiante et la température de fusion des matériaux déposés.

La représentation de la figure 10a est intéressante pour la fabrication de dépôts d'électrolyte solide sur les deux faces d'un substrat préalablement recouvertes d'un matériau d'électrode. Cependant, on peut se limiter à revêtir qu'une seule face du substrat préalablement recouvertes d'un matériau d'électrode. Aussi, la figure 10b représente un dispositif pour réaliser un revêtement sur une seule face conductrice, sans compaction mécanique.

Le dépôt d'une couche d'électrolyte par électrophorèse permet un recouvrement parfait de la surface de la couche d'électrode quelle que soit sa géométrie, la présence de défauts d'aspérité. Elle permet par conséquent de garantir les propriétés diélectriques du dépôt.

L'absence de contacts mécaniques permet de réaliser ces dépôts sur des surfaces extrêmement larges. En effet, avec des techniques de dépôts d'encre, il est difficile de garantir une parfaite homogénéité d'épaisseur sur des substrats larges, ce qui fait que les lignes de revêtement sont souvent limitées en largeur. A titre d'exemple, lorsque l'on souhaite déposer des électrodes de batterie li-ion, avec la précision requise pour garantir l'équilibrage électrique des électrodes, la largeur maximale de bande se situe aux alentours de 200 à 300 mm, ce qui limite fortement la capacité de production des lignes de revêtement selon l'état de la technique.

Lorsque des matériaux peu ou pas conducteurs électriques sont déposés sur la surface d'un substrat, les éventuelles zones moins bien revêtues, sont plus conductrices et concentrent ainsi localement une vitesse de dépôt plus importante qui tend à compenser voir effacer le défaut. Les dépôts obtenus sont ainsi intrinsèquement déposés sur toute la surface. L'épaisseur de la couche déposée par électrophorèse peut varier entre quelques dizaines de µm et 0,1 µm, mais des couches plus épaisses ou moins épaisses sont accessibles. Cependant, on préfère que le dépôt électrophorétique d'électrolyte ait une épaisseur inférieure à 5 µm, et de préférence inférieure à 2 µm ; afin de ne pas induire de résistances trop élevées dans la batterie tout en garantissant une bonne intégrité mécanique de la cellule.

### Densification du dépôt

Le procédé selon l'invention implique une densification de la couche mince d'électrolyte déposée par électrophorèse et séchée. En effet, l'empilement de particules obtenu après dépôt électrophorétique et séchage est fragile, en particulier du fait qu'il est poreux. Il ne possède pas les propriétés mécaniques permettant de garantir l'intégrité de la séparation physique entre les électrodes.

La densification permet de donner au dépôt une densité proche voire identique à celle d'un matériau massif. Ainsi, cette structure de film dense se rapproche de celle obtenue avec les techniques de dépôt sous vide, le film est continu sans porosités et les ions peuvent y migrer aisément, sans qu'il soit nécessaire d'ajouter des électrolytes liquides contenant des sels de lithium, de tels électrolytes liquides étant à l'origine des faibles performances thermique, et de la mauvaise tenue en vieillissement.

La densification du dépôt peut être réalisée :
a) par un moyen mécanique, en particulier par compression isostatique ;
b) par un traitement thermique. La température dépend fortement de la composition chimique des poudres déposées, elle dépend également des tailles de particules et de la compacité du dépôt. Il convient de préférence de maintenir une atmosphère contrôlée afin d'éviter l'oxydation, la pollution de surface des particules déposés ;
c) par une combinaison de moyens thermiques et mécaniques, en particulier par traitement thermique sous pression ;

La densification permettant d'obtenir un film dense peut être réalisée par un traitement thermique à température dite « basse ». Cette température est de préférence inférieure à 0,7T_{f}, plus préférentiellement inférieure à 0,5T_{f} et encore plus préférentiellement inférieure à 0,3T_{f}, où T_{f} est la température de fusion du matériau déposé le plus fusible. La température du traitement thermique dépend en particulier de la température de fusion du matériau déposé, de la taille des particules, et de la compacité de l'empilement des particules. D'une manière générale, on préfère ne pas dépasser 600°C, encore plus préférentiellement on ne dépasse pas 500°C. Dans certains modes de réalisation, la température est comprise entre 180°C et 400°C.

La densification à de telles températures nécessite que le film obtenu à l'issue du dépôt soit compact, c'est-à-dire sans méso porosités ni agrégats. On entend par « méso-porosité » les cavités et les fissures. Ceci est permis par le procédé de dépôt par électrophorèse tel que décrit plus haut. De plus il est nécessaire que les particules déposées soient de tailles nanométriques tel que décrit plus haut, et préférentiellement de taille inférieure à 100 nm, plus préférentiellement inférieure à 50 nm, et encore plus préférentiellement inférieure à 30 nm.

D'autre part, la température de traitement thermique dépend également de l'application ou non d'une pression, la pression pouvant être appliquée avant ou pendant le traitement thermique. Lorsqu'une pression est appliquée, la température de traitement thermique peut être abaissée.

Lorsque le film d'électrolyte contient des particules de polymère, ou est constitué d'un polymère imprégné d'un sel de lithium, la pression de compaction est avantageusement de l'ordre de 100 MPa.

Dans certains cas, la densification peut être obtenue uniquement par compression (application d'une pression mécanique). En particulier, dans le cas où le film est constitué d'un polymère imprégné d'un sel de lithium, il n'est pas nécessaire de réaliser un traitement thermique de densification, les particules de polymère étant aisément déformées, y compris à des pressions relativement basses.

Lorsque le film d'électrolyte est constitué uniquement de matériaux inorganiques, la pression appliquée doit dans certains modes de réalisation être supérieure à 250 MPa voire supérieure à 400 MPa. Cependant, avantageusement, la pression appliquée est comprise entre 30 et 100 MPa et préférentiellement entre 40 et 60 MPa

Il est ainsi possible de réaliser des dépôts en couches minces, ou relativement épaisses, avec des taux de porosité inférieurs à 5% voire 2% sans avoir recours à des températures et/ou durées de traitement thermiques importants. Par ailleurs, La densification des dépôts compacts à basse température réduit considérablement les risques de rétreint. Il n'est plus nécessaire d'avoir recours à des cycles de traitement thermique très complexes et couteux pour consolider les dépôts de céramiques des films d'électrolyte des batteries.

Durant la phase de densification mécanique et/ou thermique il peut être avantageux de travailler sous vide, ou sous atmosphère inerte afin d'éviter l'apparition de pollution sur les surfaces des particules qui pourraient nuire au mécanisme de densification des particules entre-elles.

Pour des tailles de particules telles que celles utilisées dans le procédé selon l'invention, c'est l'augmentation des énergies de surface qui devient la principale force motrice de la densification par traitement thermique; cela se traduit par une forte baisse des températures de densification lorsque la taille des particules diminue. Cependant, pour que cette réduction des températures de consolidation soit effective, il est nécessaire que les particules soient au préalable compactées mécaniquement, et/ou déposées avec un empilement compact. C'est la multiplication des contacts mécaniques entre ces particules qui permet de faciliter les processus diffusionnels à l'origine de la densification. Aussi, pour compacter les dépôts, des pressages sont généralement appliqués.

La présence d'agglomérats, de cavités inter-agglomérats influence également la densification. Plus leurs tailles augmentent, plus la distance de diffusion augmente et plus la température de densification est élevée pour obtenir une bonne densification.

Ainsi, avec des nanoparticules déposées par électrophorèse on peut s'approcher de la compacité théorique d'un empilement compact de sphères (74%) sans étape de densification mécanique.

Un tel résultat n'est pas possible par les techniques d'encrage. Le dépôt de nanoparticules par la technique des encres mentionnée ci-dessus est très difficile en couche mince car la diminution de la taille des particules conduit à l'augmentation de la viscosité des suspensions. Il faut alors diminuer l'extrait sec en augmentant la proportion de solvant ; on observe alors que l'élimination d'une grande quantité de solvant des couches crues induit des pores et cavités, qu'il sera quasiment impossible de colmater sans avoir recours à des températures et/ou pressions extrêmes.

La forte compacité du dépôt obtenu par électrophorèse, et la faible quantité de solvant à évaporer limite très sensiblement le risque d'apparition de fissures après séchage. Par ailleurs, la faible taille des particules, leur grande surface spécifique tend à faciliter les étapes de consolidation par un traitement thermique. La densification du dépôt peut ainsi être réalisée à des températures proches de 0,7T_{f}, de préférence 0,5 T_{f}, voire 0,3T_{f} où T_{f} est la température de fusion (exprimée en °C) du matériau massif (le plus fusible) de composition chimique identique à celle de la particule déposée. Pour réduire encore cette température de densification, il est également possible d'appliquer une compression mécanique à ce dépôt afin d'accroitre davantage sa compacité, et/ou créer des défauts ponctuels qui vont contribuer à accélérer le processus de densification, d'obtention de couches minces sans porosités.

Un tel procédé de fabrication de couches minces peut être utilisé directement sur des substrats comme des feuillards en aluminium, ayant de faibles températures de fusion.

La densification (traitement thermique) à basse température de la couche d'électrolyte déposée par électrophorèse selon le procédé de la présente invention évite les risques d'inter- diffusion entre les couches d'électrodes et électrolyte, l'oxydation des électrodes, les risques de détérioration (fusion ou fluage) des collecteurs de courant, et la perte de teneurs en lithium dans les matériaux à insertion,

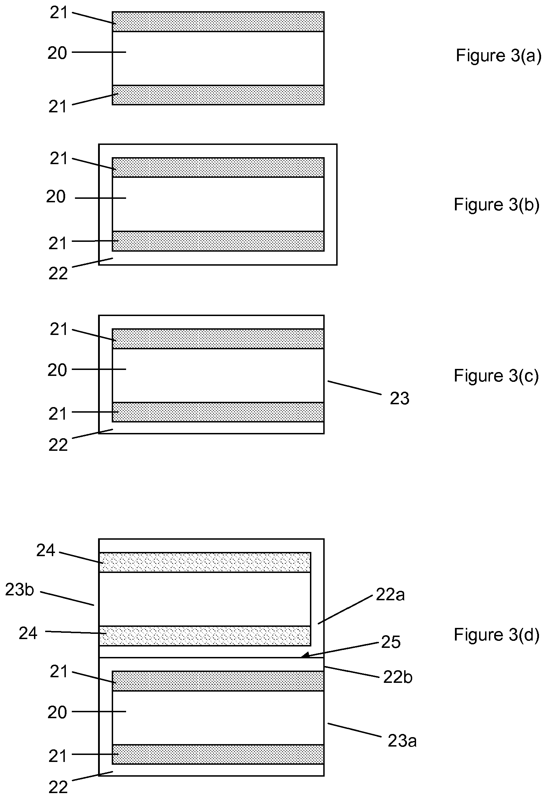

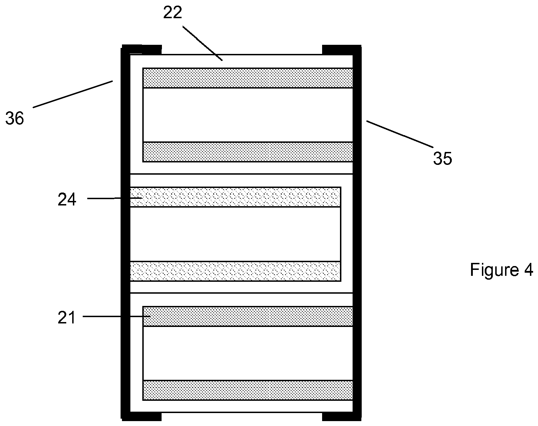

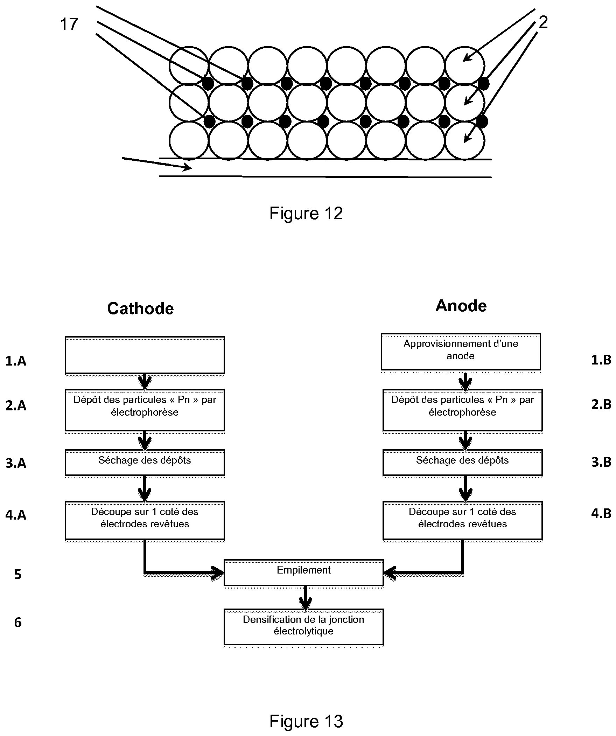

La figure 13 montre de manière schématique les étapes de fabrication d'une batterie comportant une couche d'électrolyte selon l'invention par un mode de réalisation du procédé selon l'invention ; le produit obtenu à chaque étape est montré de manière schématique sur les figures 3(b) à 3(d) et 4.

Aux étapes 1.A et 1.B, on approvisionne une anode 21, respectivement une cathode 24. Aux étapes 2.A et 2.B, on dépose sur l'anode **21** et sur la cathode **24,** respectivement, le film d'électrolyte **22,** dont l'épaisseur peut être de l'ordre de 1 µm. Ce dépôt recouvre également au moins trois des quatre bords (i.e. les tranches) des électrodes, comme montré de manière schématique sur la figure 3(b). Cette isolation des bords des électrodes évite à la fois le risque de court-circuit et le risque de courants de fuite. Aux étapes 3.A et 3.B on sèche ce dépôt d'électrolyte.

Aux étapes 4.A et 4.B, on découpe un bord des électrodes. De manière avantageuse, on découpe le bord lié à la bande, afin de laisser trois arêtes revêtues d'électrolyte sur la tranche. Cet électrolyte étant un diélectrique, il permet lors de la prochaine étape d'empilement de ne faire apparaître que les contacts anodiques d'un côté de la cellule, respectivement cathodiques sur l'autre, afin de réaliser des assemblages en parallèle des éléments de batterie afin de constituer une cellule batterie de plus forte capacité. La figure 3(c) montre schématiquement une telle section de cellule après découpe. La figure 3(d) montre une section de ce substrat **20** revêtu (ici sur les deux faces) d'un film de cathode **21** et coupé sur une tranche **23.**

A l'étape 5 on réalise un empilement de manière à ce que sur deux côtés opposés de l'empilement on trouve alternativement une succession de bords **23a** d'anode **21** découpée et de bords de cathode **24** revêtu d'électrolyte **22.** La figure 4 montre un empilement de deux substrats **20,** l'un portant sur les deux faces un film d'anode **21,** l'autre un film de cathode **24,** les deux faces du film d'électrolyte **22a,22b** étant posées l'une sur l'autre pour former une interface commune **25.** A l'étape 6, cet empilement est soumis à un traitement thermique et/ou à une compaction mécanique afin d'obtenir un film dense d'électrolyte. Ceci permet en outre d'obtenir une bonne liaison (« soudure ») entre les deux faces **22a,22b** de la couche d'électrolyte **22.**

A ce stade, il est important de rappeler qu'avec les techniques électrophorétiques, il est possible d'obtenir des dépôts ayant une très bonne compacité de départ. Ainsi, un tel dépôt ne présente qu'un faible retreint lors de la densification et donc peu ou pas de défauts dans les films, même lorsqu'ils sont réalisés sur de larges surfaces et fortes épaisseurs. Par ailleurs, cette étape de densification est réalisée d'autant plus facilement à faible température, pour des temps courts, que le film de départ est compact avec des particules de faibles dimensions. Pour accroitre davantage la compacité avant traitement thermique, il est avantageux d'utiliser des particules de faibles dimensions (<30 nm) et/ou de formes parallélépipédiques.

Une fois l'empilement réalisé, des terminaisons (contacts électriques) **35,36** sont ajoutés au niveau où les collecteurs de courant cathodiques, respectivement anodiques, sont apparents (non revêtus d'électrolyte isolant). Ces zones de contact peuvent être sur les côtés opposés de l'empilement pour collecter de courant ainsi que cela est représenté sur la figure 4, mais également sur les mêmes cotés ou sur des cotés adjacents.

Dans un mode de réalisation particulier, l'empilement illustré sur la figure 4 est réalisé par enroulement de deux demi-électrodes (dont une est montrée sur la figure 3(c)) entre elles sur un mandrin afin d'obtenir une cellule forme cylindrique. Comme pour la configuration de la figure 4, les connexions anodiques sortent alors d'un côté, alors que les connexions cathodiques sortent de l'autre côte.

Sur toutes les figures qui suivent seules deux cellules sont représentées dans les empilements, mais il est évident que le nombre de cellules empilées peut être beaucoup plus important.

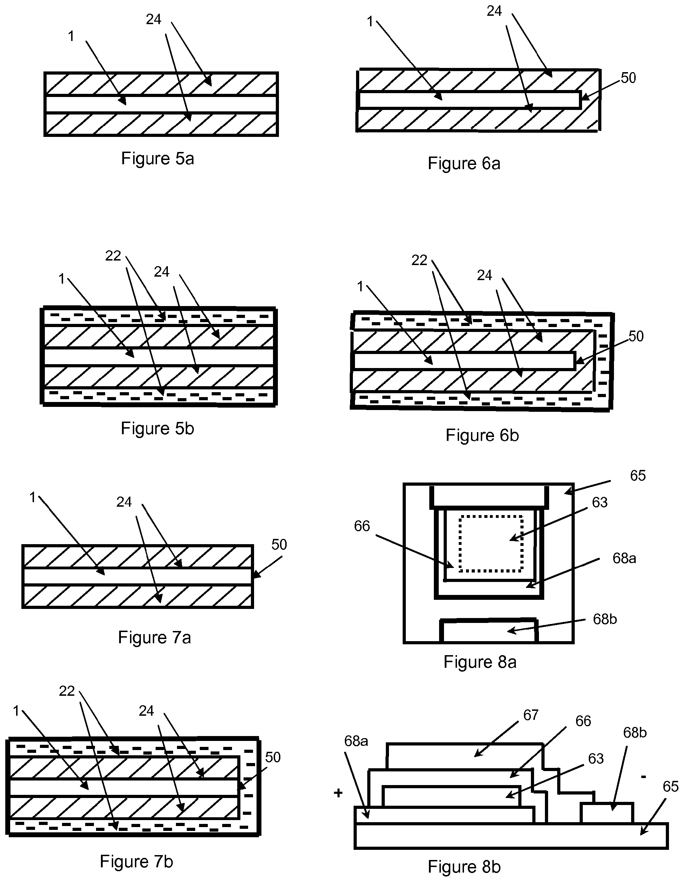

Les figures 5a et 5b illustrent les différentes étapes d'un dépôt par électrophorèse selon l'invention. La figure 5a représente l'approvisionnement d'un substrat, ici sous forme de feuillard métallique 1 recouvert d'une couche de cathode 24. La figure 5b représente un dépôt par électrophorèse des nanoparticules d'électrolyte sur la cathode. Le produit obtenu par le procédé selon les figures 5a et 5b correspond au cas où le substrat est approvisionné sous forme de bande, et des plaques de substrat revêtu de cathode et d'électrolyte sont ensuite découpées dans la bande.

Les figures 6a et 6b représentent des produits identiques à ceux des figures 5a et 5b, hormis que la couche de cathode et la couche d'électrolyte recouvrent en plus une tranche 50 du substrat 1. Ce produit est obtenu en partant d'une plaque de substrat 1 prédécoupée sur laquelle sont déposées les couches de cathode puis d'électrolyte.

Les figures 7a et 7b représentent des produits identiques à ceux des figures 5a et 5b, hormis que la couche d'électrolyte recouvre en plus une tranche 50 du substrat 1 et de la couche de cathode 24. Dans ce mode de réalisation, le dépôt par électrophorèse des nanoparticules de cathode a été fait sur une bande qui est ensuite découpée, l'électrolyte est déposé après découpe.

La figure 8a représente le dépôt par électrophorèse des nanoparticules d'électrolyte **66** sur la partie métallique du substrat **68a** recouverte de cathode **63.** Dans ce mode de réalisation, on approvisionne un substrat sous forme d'une plaque isolante **65** revêtue partiellement de films métalliques **68a, 68b.** La figure 8b représente une vue en coupe de la batterie obtenue après dépôt du film mince d'anode.

La figure 12 représente le dépôt compact de nanoparticules de tailles non-homogènes **2, 17.** Un tel empilement peut être obtenu directement par co-dépôt d'un mélange de nanoparticules de tailles différentes ou par dépôt successifs de particules de tailles différentes.

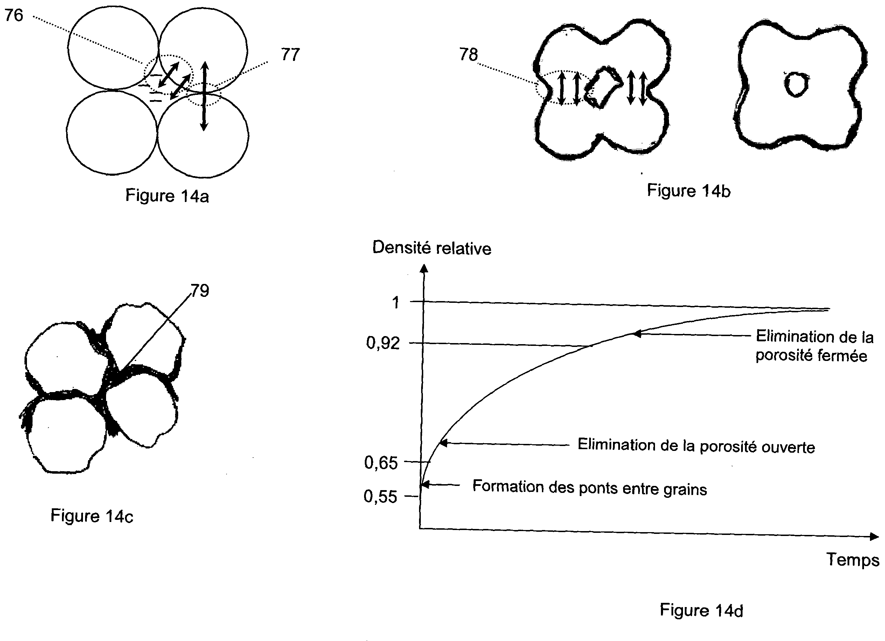

La figure 14a représente le chemin de diffusion du lithium dans un empilement compact de particules imprégné d'électrolyte selon l'état de la technique. Il existe une zone de contact surfacique **76** entre les particules et l'électrolyte contenu dans les porosités. Le chemin de diffusion est peu résistif. Il existe également une zone de contact ponctuel **77** entre les particules. La diffusion du lithium sur ce contact ponctuel est limitée. La figure 14b représente l'évolution de l'interface entre les particules pendant la consolidation de la couche d'électrolyte selon le procédé de la présente invention. Le chemin de diffusion **78** peut être assuré en phase solide, sans recours à un électrolyte liquide dans les porosités.

La figure 14c représente la structure obtenue après densification d'un dépôt composite contenant une phase «fusible» **79.** La figure 14d montre de manière schématique l'influence de la densification sur le type de porosité. Ce point peut justifier que nos batteries aient des porosités inférieures à 30%. A ce niveau, elles sont fermées et ne peuvent plus être imprégnées d'électrolyte.

Le procédé selon l'invention présente ainsi de nombreux avantages :
Il permet de réaliser des films minces d'électrolyte conducteurs des ions lithium ayant une épaisseur inférieure à 10 µm. Les films d'électrolyte solide obtenus par le procédé selon l'invention peuvent recouvrir le bord des électrodes, et éviter les risques de court-circuit. Le procédé selon l'invention ne nécessite pas d'avoir recours aux techniques du vide, et il est ainsi plus simple à mettre en oeuvre et plus économique. Les films d'électrolyte solide obtenus par le procédé selon l'invention ont une porosité inférieure à 10% et préférentiellement inférieure à 5%. Le procédé selon l'invention permet de fabriquer des films d'électrolyte solide composites et composés de plusieurs phases distinctes. Les films d'électrolyte solide obtenus par le procédé selon l'invention sont réalisés à faible température, et peuvent par conséquent être réalisé sur des substrats sensibles aux températures élevées. Du fait de la faible porosité des films obtenus par le procédé selon l'invention, les risques d'inter diffusion d'une couche à l'autre sont limités. La taille de grain de la couche obtenue est généralement inférieure à 1 µm.

### EXEMPLES

### Exemple 1

### Préparation de la suspension colloïdale de matériau d'électrolyte

Pour réaliser la suspension colloïdale contenant des particules de l'électrolyte, on synthétise tout d'abord des poudres nanométriques du Li_{1,3}Al_{0,3}Ti_{1,7}(PO₄)₃ en utilisant le procédé décrit dans la publication « Thin-film lithium-ion battery derived from Li1,3Al0,3Ti1,7(PO4)3 sintered pellets » par Xiao et al, paru dans Trans. Nonferrous Me. Soc. China 16 (2006), p. 281-285. On dissout en quantité stoechiométrique le Li(CH₃-COO).2H₂O et Al(NO₃)₃.9H₂O dans CH₃OCH₂CH₂OH, puis on ajout à ce mélange sous agitation PO(OC₄H₉)₄. Après avoir ajouté la quantité stoechiométrique d'eau déminéralisée pour l'hydrolyse des alkoxydes, la suspension obtenue est séchée à 140°C pendant 4 heures pour former un gel de Li_{1,3}Al_{0,3}Ti_{1,7}(PO₄)₃. Ce gel est par la suite calciné à 900°C pendant 2 heures et pour obtenir une poudre agglomérée de Li_{1,3}Al_{0,3}Ti_{1,7}(PO₄)₃ ; cette poudre est ensuite mise en suspension dans de l'éthanol et avec une concentration égale à 20 g/l.

La suspension est introduite dans le bol d'un broyeur à billes préalablement rempli de billes en céramiques de diamètre 0,1 mm. Le broyage pendant 3 heures en présence de quelques millilitres d'acide polyacrylique qui sert d'agent complexant permet d'obtenir une solution colloïdale présentant des particules dont la taille D₅₀ est égale à 15 nm. Le potentiel zêta de la suspension est de l'ordre de 60 mV.

### Réalisation de la cellule électrochimique

Les particules de Li_{1,3}Al_{0,3}Ti_{1,7}(PO₄)₃ obtenues dans la suspension sont par la suite déposées sur le revêtement de cathode, en appliquant entre le substrat et un contre-électrode, tous deux immergés dans la suspension colloïdale, une tension de 100 V jusqu'à obtenir un dépôt de 1 µm d'épaisseur.

La cathode revêtue du film mince de nanoparticules d'électrolyte (non fritté) est ensuite empilée avec l'anode également recouvert d'un film mince de nanoparticules d'électrolyte (non fritté). L'empilement collecteur+/cathode / électrolyte / anode / collecteur est ensuite comprimé sous 400 MPa puis densifié à 300°C pendant 30 minutes jusqu'à obtention d'une cellule batterie Li-ion totalement compacte et inorganique.

### Exemple 2

Des poudres de Li_{1,3}Al_{0,3}Ti_{1,7}(PO₄)₃ ont été synthétisées de la même manière que dans l'exemple 1.

Les poudres nanométriques de Li_{1,3}Al_{0,3}Ti_{1,7}(PO₄)₃ ont été mises en suspension colloïdales dans l'alcool éthylique par broyage-dispersion. Aucun stabilisant n'a été ajouté à la suspension colloïdale, qui avait un extrait sec de 10 g/l. La suspension ainsi obtenue était parfaitement stable

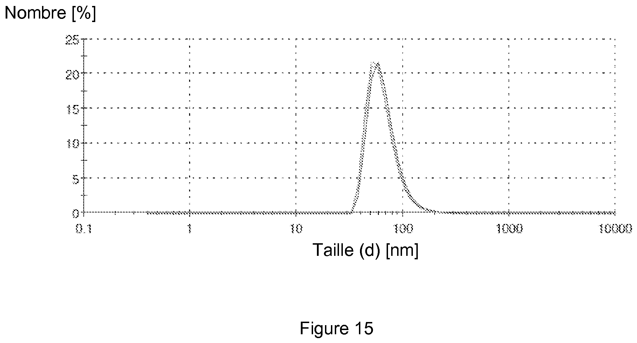

La distribution granulométrique des nanoparticules des suspensions colloïdales a été déterminée par DLS (dynamic light scattering - diffusion dynamique de la lumière) également appelée spectroscopie de corrélation de photons avec un appareil commercial Zetasizer de Malvern Instruments. Le principe de mesure est basé sur le mouvement brownien des particules en suspension. Cette technique de mesure quantifie la vitesse de diffusion des particules en solution, afin d'en déduire leur rayon hydrodynamique. Les mesures DLS présentées à la figure 15 illustrent la distribution de tailles de particules en suspension.

La taille moyenne des particules en suspension est de 60 nm. Afin d'être certain de ne pas prélever d'agglomérats, nous travaillons quasi exclusivement avec les surnageants des suspensions après décantation.

Ce film de nanoparticules de Li_{1,3}Al_{0,3}Ti_{1,7}(PO₄)₃ a été obtenu à partir de cete suspension par électrophorèse (anaphorèse) sous un champ de 10V/cm pendant 30 secondes.

### Exemple 3 - Synthèse de nanoparticules utilisables comme matériaux d'anode, cathode ou électrolyte : Li_{2,9}PO_{3,3}N_{0,36}/Li_{2,9}PO_{3,3}N_{0,46} (LiPON)

On place une poudre nanométrique de Li₃PO₄ non traitée thermiquement à haute température dans une nacelle en alumine placé dans un four tubulaire. La poudre est ensuite traitée thermiquement à 650°C pendant 2h sous atmosphère d'ammoniac. La poudre ainsi obtenue peut être utilisé pour préparer des films d'électrolyte dans des batteries de type Li-ion.

## Revendications

1. Procédé de fabrication d'une couche mince d'électrolyte solide de batterie, comprenant les étapes de :
a) Approvisionnement d'une couche de substrat éventuellement conducteur, éventuellement préalablement recouvert d'une couche d'anode ou de cathode,
b) Dépôt d'une couche mince d'électrolyte par électrophorèse, à partir d'une suspension de particules de matériau d'électrolyte, sur ledit substrat et/ou ladite couche d'anode ou de cathode préalablement formée,
c) Séchage de la couche ainsi obtenue ;
d) Densification de la couche mince d'électrolyte obtenue à l'étape précédente par compression mécanique et/ou traitement thermique,
**caractérisé en ce que** l'épaisseur de la couche d'électrolyte déposée est inférieure à 5 µm,
et **en ce que** la taille moyenne D₅₀ des particules de matériau d'électrolyte solide est inférieure à 100 nm et plus préférentiellement inférieure ou égale à 30 nm.

2. Procédé selon la revendication 1 **caractérisé en ce que** les particules d'électrolyte sont constitués d'au moins un matériau inorganique, de préférence sélectionné dans le groupe formé par :
(1) les composés lithiés à base d'oxynitrure de lithium et de phosphore (appelés LiPON) sous forme LiₓPO_{y}N_{z} avec x ∼2,8 et 2y+3z ∼7,8 et 0,16 ≤ z ≤ 0,4, et en particulier le Li_{2,9}PO_{3,3}N_{0,46}, mais également toutes les variantes sous forme Li_{w}POₓN_{y}S_{z} avec 2x+3y+2z = 5=w et 3,2 ≤ x ≤ 3,8, 0,13 ≤ y ≤ 0,4, 0 ≤ z ≤ 0,2, 2,9 ≤ w ≤ 3,3 ou sous forme LiₜPₓAl_{y}OᵤNᵥS_{w} avec 5x+3y=5, 2u+3v+2w=5+t, 2,9≤t≤3,3, 0,94≤x≤0,84, 0,094≤y≤0,26, 3,2≤u≤3,8, 0,13≤v≤0,46, 0≤w≤0,2 ;
(2) les composé lithiés à base d'oxynitrure de lithium, de phosphore et de silicium (appelés LiSiPON), et en particulier le Li_{1.9}Si_{0.28}P_{1.0}O_{1.1}N_{1.0} ;
(3) les oxynitrures de lithium de types LiBON, LiBSO, LiSiPON, LiSON, thio-LiSiCON, LiPONB (ou B, P et S représentent respectivement le bore, le phosphore et le soufre);
(4) les composés La_{0,5}Li_{0,34}Ti_{2,94}, Li_{3,4}V_{0,4}Ge_{0,6}O₄, Li₂O-Nb₂O₅, LiAlGaSPO₄ ;
(5) les formulations à base de Li₄SiO₄, Li₃PO₄, Li₂CO₃, B₂O₃, Li₂O, Al(PO₃)₃LiF, P₂S₃, Li₂S, Li₃N, Li₁₄Zn(GeO₄)₄, Li_{3,6}Ge_{0,6}V_{0,4}O₄, LiTi₂(PO₄)₃, Li_{0,35}La_{0,55}TiO₃, Li_{3,25}Ge_{0,25}P_{0,25}S₄, Li_{1,3}Al_{0,3}Ti_{1,7}(PO₄)₃, Li₁₊ₓAlₓM₂₋ₓ(PO₄)₃ (où M = Ge, Ti, et/ou Hf, et où 0 < x < 1), Li_{1+x+y}AlₓTi₂₋ₓSi_{y}P_{3-y}O₁₂ (où 0≤x≤1 et 0≤y≤1), Li_{1+x+z}Mₓ(Ge_{1-y}Ti_{y})₂₋ₓSi₂P_{3-z}O₁₂ (où 0 ≤ x ≤0,8 ; 0 ≤ y ≤ 1,0 ; 0 ≤ z ≤ 0,6), et en particulier les formulations 4,9Lil-34,1Li₂O-61B₂O₃, 0,30Li₂S-0,26B₂S₃-0,44Lil, 60Li₂S-40SiS₂, 0,02Li₃PO₄-0,98(Li₂S-SiS₂), 2(Li_{1,4}Ti₂Si_{0,4}P_{2,6}O₁₂)-AlPO₄, 0,7Li₂S-0,3P₂S₅.

3. Procédé selon la revendication 1, **caractérisé en ce que** les particules d'électrolyte comportent/sont constituées d'au moins un polymère imprégné d'un sel de lithium, le polymère étant de préférence choisi dans le groupe formé par le le polyéthylène oxyde, les polyimides, le polyfluorure de vinylidène, le polyacrylonitrile, le polyméthacrylate de méthyle, les polysiloxanes, et le sel de lithium étant de préférence choisi parmi LiCl, LiBr, LiI, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆H₅)₄), Li(SCN), Li(NO₃).

4. Procédé selon l'une quelconque des revendications 1 à 3, **caractérisé en ce que** l'étape dite de densification est une étape de densification mécanique par application d'une pression comprise entre 20 et 100 MPa.

5. Procédé selon l'une quelconque des revendications 1 à 3, **caractérisé en ce que** l'étape dite de densification est une étape de traitement thermique à une température T_{R} qui ne dépasse pas 0,7 fois la température de fusion (exprimée en °C), préférentiellement ne dépasse pas 0,5 fois la température de fusion (exprimée en °C), et encore plus préférentiellement ne dépasse pas 0,3 fois la température de fusion (exprimée en °C) du matériau d'électrolyte le plus fusible.

6. Procédé selon l'une quelconque des revendications 1 à 3, **caractérisé en ce que** l'étape dite de densification comporte une étape d'application d'une pression comprise entre 20 et 100 MPa, suivie d'une étape de traitement thermique à une température T_{R} qui ne dépasse pas 0,7 fois la température de fusion (exprimée en °C), préférentiellement ne dépasse pas 0,5 fois la température de fusion (exprimée en °C), et encore plus préférentiellement ne dépasse pas 0,3 fois la température de fusion (exprimée en °C) du matériau d'électrolyte le plus fusible.

7. Procédé selon l'une quelconque des revendications 1 à 3, **caractérisé en ce que** l'étape dite de densification comporte une étape de recuit à une température T_{R} qui ne dépasse pas 0,7 fois la température de fusion (exprimée en °C), préférentiellement ne dépasse pas 0,5 fois la température de fusion (exprimée en °C), et encore plus préférentiellement ne dépasse pas 0,3 fois la température de fusion (exprimée en °C) du matériau d'électrolyte le plus fusible, suivie d'une étape d'application d'une pression comprise entre 20 et 100 MPa.

8. Procédé selon l'une quelconque des revendications 1 à 3, **caractérisé en ce que** l'étape dite de densification est une étape de traitement thermique sous pression, à une température T_{R} qui ne dépasse pas 0,7 fois la température de fusion (exprimée en °C), plus préférentiellement ne dépasse pas 0,5 fois la température de fusion (exprimée en °C), et encore plus préférentiellement ne dépasse pas 0,3 fois la température de fusion (exprimée en °C) du matériau d'électrolyte le plus fusible., et à une pression comprise entre 20 et 100 MPa.

9. Procédé selon l'une quelconque des revendications précédentes **caractérisé en ce que** l'étape de densification d) est réalisée sous vide ou sous atmosphère inerte.

10. Procédé selon l'une quelconque des revendications précédentes, **caractérisé en ce que** la suspension de particules de matériau d'électrolyte a un extrait sec compris entre 2 et 20 g/L, et de préférence entre 3 et 10 g/L.

11. Procédé selon l'une quelconque des revendications précédentes, **caractérisé en ce que** la suspension de particules de matériau d'électrolyte ne contient pas de stabilisant.

12. Procédé selon l'une des revendications précédentes **caractérisé en ce que** la couche d'électrolyte recouvre également les bords de ladite couche d'anode ou de cathode préalablement formée.

13. Procédé de fabrication d'une batterie mettant en oeuvre le procédé selon l'une des revendications précédentes et comprenant les étapes de :
a) Approvisionnement d'une suspension colloïdale de particules conductrice des ions lithium dite de « matériaux d'électrolyte solide » ;
b) Approvisionnement de deux substrats conducteurs plats, de préférence métalliques, lesdits substrats conducteurs pouvant servir comme collecteurs de courant de la batterie, et étant éventuellement recouverts sur au moins une partie d'au moins une de leurs faces d'une couche de cathode, respectivement d'anode,
c) Dépôt d'une couche mince d'électrolyte par électrophorèse, à partir d'une suspension de particules de matériau d'électrolyte, sur ladite couche d'anode et/ou ladite couche de cathode et/ou ledit substrat obtenus à l'étape b),
d) Séchage de la couche ainsi obtenue,
e) Assemblage soit :
• de l'empilement substrat/cathode/électrolyte obtenu à l'étape c) et soit de l'empilement substrat/anode obtenu à l'étape a) soit de l'empilement substrat/anode/électrolyte obtenu à l'étape c) pour obtenir une batterie de structure empilée « collecteur / anode / électrolyte / cathode / collecteur »,
• de l'empilement substrat/anode/électrolyte obtenu à l'étape c) et soit de l'empilement substrat/cathode obtenu à l'étape a) soit de l'empilement substrat/cathode/électrolyte obtenu à l'étape c) pour obtenir une batterie de structure empilée « collecteur / anode / électrolyte / cathode / collecteur »,
f) Densification de la couche mince d'électrolyte obtenue à l'étape précédente par compression mécanique et/ou traitement thermique.

14. Batterie comprenant une couche d'électrolyte fabriquée selon le procédé de l'une quelconque des revendications 1 à 13.

## Patentansprüche

1. Verfahren zur Herstellung einer Festelektrolytdünnschicht einer Batterie, das die folgenden Schritte umfasst:
a) Bereitstellen einer gegebenenfalls leitenden Substratschicht, die gegebenenfalls zuvor mit einer Anoden- oder Kathodenschicht bedeckt wurde,
b) Abscheiden einer Elektrolytdünnschicht durch Elektrophorese aus einer Suspension von Elektrolytmaterialteilchen auf dem besagten Substrat und/oder der besagten zuvor gebildeten Anoden- oder Kathodenschicht,
c) Trocknen der so erhaltenen Schicht;
d) Verdichten der im vorhergehenden Schritt erhaltenen Elektrolytdünnschicht durch mechanische Kompression und/oder Wärmebehandlung,
**dadurch gekennzeichnet, dass** die Dicke der abgeschiedenen Elektrolytschicht kleiner als 5 µm ist
und dass die durchschnittliche Größe D₅₀ von Festelektrolytmaterialteilchen kleiner als 100 nm und bevorzugt kleiner gleich 30 nm ist.

2. Verfahren nach Anspruch 1, **dadurch gekennzeichnet, dass** die Elektrolytteilchen aus mindestens einem anorganischen Material bestehen, das vorzugsweise aus der Gruppe ausgewählt ist, die von folgenden Materialien gebildet wird:
(1) Lithiumverbindungen auf der Basis von Lithium- und Phosphoroxynitrid (LiPON genannt) in der Form LiₓPO_{y}N_{z}, wobei x ∼2,8 und 2y+3z ∼7,8 und 0,16 ≤ z ≤ 0,4, und insbesondere Li_{2,9}PO_{3,3}N_{0,46}, aber auch alle Varianten in der Form Li_{w}POₓN_{y}S_{z}, wobei 2x+3y+2z = 5 = w und 3,2 ≤ x ≤ 3,8, 0,13 ≤ y ≤ 0,4, 0 ≤ z ≤ 0,2, 2,9 ≤ w ≤ 3,3, oder in der Form LiₜPₓAl_{y}OᵤNᵥS_{w}, wobei 5x+3y = 5, 2u+3v+2w = 5+t, 2,9 ≤ t ≤ 3,3, 0,94 ≤ x ≤ 0,84, 0,094 ≤ y ≤ 0,26, 3,2 ≤ u ≤ 3,8, 0,13 ≤ v ≤ 0,46, 0 ≤ w ≤ 0,2;
(2) Lithiumverbindungen auf der Basis von Lithium-, Phosphor- und Siliciumoxynitrid (LiSiPON genannt) und insbesondere Li_{1,9}Si_{0,28}P_{1,0}O_{1,1}N_{1,0};
(3) Lithiumoxynitriden der Typen LiBON, LiBSO, LiSiPON, LiSON, Thio-LiSiCON, LiPONB (wobei B, P und S für Bor, Phosphor bzw. Schwefel stehen);
(4) den Verbindungen La_{0,51}Li_{0,34}Ti_{2,94}, Li_{3,4}V_{0,4}Ge_{0,6}O₄, Li₂O-Nb₂O₅, LiAlGaSPO₄;
(5) Formulierungen auf der Basis von Li₄SiO₄, Li₃PO₄, Li₂CO₃, B₂O₃, Li₂O, Al(PO₃)₃LiF, P₂S₃, Li₂S, Li₃N, Li₁₄Zn(GeO₄)₄, Li_{3,6}Ge_{0,6}V_{0,4}O₄, LiTi₂(PO₄)₃, Li_{0,35}La_{0,55}TiO₃, Li_{3,25}Ge_{0,25}P_{0,25}S₄, Li_{1,3}Al_{0,3}Ti_{1,7}(PO₄)₃, Li₁₊ₓAlₓM₂₋ₓ(PO₄)₃ (wobei M = Ge, Ti und/oder Hf und wobei 0 < x < 1), Li_{1+x+y}AlₓTi₂₋ₓSi_{y}P_{3-y}O₁₂ (wobei 0 ≤ x ≤ 1 und 0 ≤ y ≤ 1), Li_{1+x+z}Mₓ(Ge_{1-y}Ti_{y})₂₋ₓSi_{z}P_{3-z}O₁₂ (wobei 0 ≤ x ≤ 0,8 ; 0 ≤ y ≤ 1,0 ; 0 ≤ z ≤ 0,6), und insbesondere den Formulierungen 4,9LiI-34,1Li₂O-61B₂O₃, 0,30Li₂S-0,26B₂S₃-0,44LiI, 60Li₂S-40SiS₂, 0,02Li₃PO₄-0,98(Li₂S-SiS₂), 2(Li_{1,4}Ti₂Si_{0,4}P_{2,6}O₁₂) - AlPO₄, 0,7Li₂S-0,3P₂S₅.

3. Verfahren nach Anspruch 1, **dadurch gekennzeichnet, dass** die Elektrolytteilchen mindestens ein mit einem Lithiumsalz imprägniertes Polymer umfassen/aus einem solchen bestehen, wobei das Polymer vorzugsweise aus der Gruppe ausgewählt ist, die von Polyethylenoxid, Polyimiden, Polyvinylidenfluorid, Polyacrylnitril, Polymethylmethacrylat, Polysiloxanen gebildet wird, und das Lithiumsalz vorzugsweise aus LiCl, LiBr, LiI, Li(ClO₄), Li(BF₄), Li(PF₆) , Li(AsF₆), Li(CH₃CO₂), Li(CF₃SO₃), Li (CF₃SO₂)₂N, Li(CF₃SO₂)₃, Li(CF₃CO₂), Li(B(C₆H₅)₄), Li(SCN), Li(NO₃) ausgewählt ist.

4. Verfahren nach einem der Ansprüche 1 bis 3, **dadurch gekennzeichnet, dass** der genannte Verdichtungsschritt ein Schritt eines mechanischen Verdichtens durch Ausüben eines Drucks zwischen 20 und 100 MPa ist.

5. Verfahren nach einem der Ansprüche 1 bis 3, **dadurch gekennzeichnet, dass** der genannte Verdichtungsschritt ein Schritt einer Wärmebehandlung bei einer Temperatur T_{R} ist, die nicht das 0,7-fache der Schmelztemperatur (in °C ausgedrückt), vorzugsweise nicht das 0,5-fache der Schmelztemperatur (in °C ausgedrückt) und noch mehr bevorzugt nicht das 0,3-fache der Schmelztemperatur (in °C ausgedrückt) des am besten schmelzbaren Elektrolytmaterials übersteigt.

6. Verfahren nach einem der Ansprüche 1 bis 3, **dadurch gekennzeichnet, dass** der genannte Verdichtungsschritt einen Schritt eines Ausübens eines Drucks zwischen 20 und 100 MPa gefolgt von einem Schritt einer Wärmebehandlung bei einer Temperatur T_{R} umfasst, die nicht das 0,7-fache der Schmelztemperatur (in °C ausgedrückt), vorzugsweise nicht das 0,5-fache der Schmelztemperatur (in °C ausgedrückt) und noch mehr bevorzugt nicht das 0,3-fache der Schmelztemperatur (in °C ausgedrückt) des am besten schmelzbaren Elektrolytmaterials übersteigt.

7. Verfahren nach einem der Ansprüche 1 bis 3, **dadurch gekennzeichnet, dass** der genannte Verdichtungsschritt einen Schritt eines Temperns bei einer Temperatur T_{R} umfasst, die nicht das 0,7-fache der Schmelztemperatur (in °C ausgedrückt), vorzugsweise nicht das 0,5-fache der Schmelztemperatur (in °C ausgedrückt) und noch mehr bevorzugt nicht das 0,3-fache der Schmelztemperatur (in °C ausgedrückt) des am besten schmelzbaren Elektrolytmaterials übersteigt, gefolgt von einem Schritt eines Ausübens eines Drucks zwischen 20 und 100 MPa.

8. Verfahren nach einem der Ansprüche 1 bis 3, **dadurch gekennzeichnet, dass** der genannte Verdichtungsschritt ein Schritt einer Wärmebehandlung unter Druck bei einer Temperatur T_{R}, die nicht das 0,7-fache der Schmelztemperatur (in °C ausgedrückt), vorzugsweise nicht das 0,5-fache der Schmelztemperatur (in °C ausgedrückt) und noch mehr bevorzugt nicht das 0,3-fache der Schmelztemperatur (in °C ausgedrückt) des am besten schmelzbaren Elektrolytmaterials übersteigt, und einem Druck zwischen 20 und 100 MPa ist.

9. Verfahren nach einem der vorhergehenden Ansprüche, **dadurch gekennzeichnet, dass** der Verdichtungsschritt d) unter Vakuum oder unter einer Inertatmosphäre umgesetzt wird.

10. Verfahren nach einem der vorhergehenden Ansprüche, **dadurch gekennzeichnet, dass** die Suspension von Elektrolytmaterialteilchen einen Trockenextrakt zwischen 2 und 20 g/L und vorzugsweise zwischen 3 und 10 g/L aufweist.

11. Verfahren nach einem der vorhergehenden Ansprüche, **dadurch gekennzeichnet, dass** die Suspension von Elektrolytmaterialteilchen keinen Stabilisator enthält.

12. Verfahren nach einem der vorhergehenden Ansprüche, **dadurch gekennzeichnet, dass** die Elektrolytschicht auch die Ränder der besagten zuvor gebildeten Anoden- oder Kathodenschicht bedeckt.

13. Verfahren zur Herstellung einer Batterie unter Durchführung des Verfahrens nach einem der vorhergehenden Ansprüche, wobei das Herstellungsverfahren die folgenden Schritte umfasst:
a) Bereitstellen einer kolloidalen Suspension von Lithiumionen leitenden Teilchen, die "Festelektrolytmaterialien" genannt werden;
b) Bereitstellen von zwei flachen leitenden, vorzugsweise metallischen Substraten, wobei die besagten leitenden Substrate als Stromkollektoren der Batterie dienen können und gegebenenfalls auf mindestens einem Teil von mindestens einer ihrer Flächen mit einer Kathoden- bzw. Anodenschicht bedeckt ist,
c) Abscheiden einer Elektrolytdünnschicht durch Elektrophorese aus einer Suspension von Elektrolytmaterialteilchen auf der besagten Anodenschicht und/oder der besagten Kathodenschicht und/oder dem besagten Substrat, die in Schritt b) erhalten wurden,
d) Trocknen der so erhaltenen Schicht,
e) Zusammenfügen von entweder:
- dem in Schritt c) erhaltenen Substrat-/Kathoden-/Elektrolytstapel und dem in Schritt a) erhaltenden Substrat-/Anodenstapel oder dem in Schritt c) erhaltenen Substrat-/Anoden-/Elektrolytstapel, um eine "Kollektor/Anode/Elektrolyt/Kathode/Kollektor"-Stapelstruktur-Batterie zu erhalten, oder
- dem in Schritt c) erhaltenen Substrat-/Anoden-/Elektrolytstapel und dem in Schritt a) erhaltenden Substrat-/Kathodenstapel oder dem in Schritt c) erhaltenen Substrat-/Kathoden-/Elektrolytstapel, um eine "Kollektor/Anode/Elektrolyt/Kathode/Kollektor"-Stapelstruktur-Batterie zu erhalten,
f) Verdichten der im vorhergehenden Schritt erhaltenen Elektrolytdünnschicht durch mechanische Kompression und/oder Wärmebehandlung.

14. Batterie, die eine gemäß dem Verfahren nach einem der Ansprüche 1 bis 13 hergestellte Elektrolytschicht umfasst.

## Claims

1. Method for the fabrication of a solid electrolyte thin film for a battery, comprising the steps of:
a) procuring an optionally conductive substrate film, optionally previously coated witch an anode or cathode film,
b) depositing an electrolyte thin film by electrophoresis, from a suspension of particles of electrolyte material, on said substrate and/or said previously formed anode or cathode film,
c) drying the film thus obtained;
d) consolidating the electrolyte thin film obtained at the previous step, by mechanical compression and/or heat treatment,
**characterized in that** the thickness of the deposited electrolyte film is less than 5 µm
and **in that** the average size D₅₀ of the particles of solid electrolyte material is less 100 nm and more preferably less than or equal to 30 nm.

2. Method according to claim 1, **characterized in that** the electrolyte particles are composed of at least one inorganic material, preferably selected in the group formed by:
(1) lithium compounds based on lithium and phosphorus oxynitrides (called LiPON) in the form LiₓPO_{y}N_{z} where x -2.8 and 2y+3z -7.8 and 0.16 ≤ z ≤ 0.4, and in particular Li_{2.9}PO_{3.3}N_{0.46}, but also all variants in the form Li_{w}POₓN_{y}S_{z} where 2x+3y+2z = 5=w and 3.2 ≤ x ≤ 3.8, 0.13 ≤ y ≤ 0.4, 0 ≤ z ≤ 0.2, 2.9 ≤ w ≤ 3.3 or in the form LiₜPₓAl_{y}OᵤNᵥS_{w} where 5x+3y=5, 2u+3v+2w=5+t, 2.9≤t≤3.3, 0.94≤x≤0.84, 0.094≤y≤0.26, 3.2≤u≤3.8, 0.13≤v≤0.46, 0≤w≤0.2;
(2) lithium compounds based on lithium, phosphorus and silicon oxynitrides (called LiSiPON), and particularly Li_{1.9}Si_{0.28}P_{1.0}O_{1.1}N_{1.0};
(3) lithium oxynitrides of the LiBON, LiBSO, LiSiPON, LiSON, thio-LiSiCON and LiPONB types (where B, P and S represent boron, phosphorus and sulfur respectively);
(4) the compounds La_{0.51}Li_{0.34}T_{12.94}, Li_{3.4}V_{0.4}Ge_{0.6}O₄, Li₂O-Nb₂O₅ and LiAlGaSPO₄;
(5) formulations based on Li₄SiO₄, Li₃PO₄, Li₂CO₃, B₂O₃, Li₂O, Al(PO₃)₃LiF, P₂S₃, Li₂S, Li₃N, Li₁₄Zn (GeO₄)₄, Li_{3.6}Ge_{0.6}V_{0.4}O₄, LiTi₂(PO₄)₃, Li_{0.35}La_{0.55}TiO₃, Li_{3.25}Ge_{0.25}P_{0.25}S₄, Li_{1.3}Al_{0.3}Ti_{1.7} (PO₄)₃, Li₁₊ₓAlₓM₂₋ₓ(PO₄)₃ (where M = Ge, Ti, and/or Hf, and where 0 < x < 1), Li_{1+x+y}AlₓTi₂₋ₓSi_{y}P_{3-y}O₁₂ (where 0≤x≤1 and 0≤y≤1), Li_{1+x+z}Mₓ(Ge_{1-y}Ti_{y})₂₋ₓSi_{z}P_{3-z}O₁₂ (where 0 ≤ x ≤ 0.8 ; 0 ≤ y ≤ 1.0 ; 0 ≤ z ≤ 0.6), and particularly the formulations 4.9LiI-34, 1Li₂O-61B₂O₃, 0.30Li₂S-0.26B₂S₃-0.44LiI, 60Li.₂S-40SiS₂, 0.02Li₃PO₄-0.98(Li₂S-SiS₂), 2(Li_{1.4}Ti₂Si_{0.4}P_{2.6}O₁₂)-AlPO₄, 0.7Li₂S-0.3P₂S₅.

3. Method according to claim 1, **characterized in that** the electrolyte particles comprise/consist of at least one polymer impregnated with a lithium salt, the polymer preferably being chosen from the group formed by polyethylene oxide, polyimides, polyvinylidene fluoride, polyacrylonitrile, polymethyl methacrylate and polysiloxanes, and the lithium salt preferably being chosen from among LiCl, LiBr, LiI, Li(ClO₄), Li(BF₄), Li(PF₆), Li(AsF₆), Li(CH₃CO₂), Li(CF₃SO₃), Li(CF₃SO₂)₂N, Li(CF₃SO₂)₃, Li(CF₃CO₂), Li(B(C₆H₅)₄), Li(SCN) and Li(NO₃).

4. Method according to any of claims 1 to 3, **characterized in that** the so-called consolidation step is a step of mechanical consolidation by the application of a pressure of between 20 MPa and 100 MPa.

5. Method according to any of claims 1 to 3, **characterized in that** the so-called consolidation step is a heat treatment step at a temperature T_{R} that does not exceed 0.7 times the melting point (expressed in °C), preferably does not exceed 0.5 times the melting point (expressed in °C), and even more preferably does not exceed 0.3 times the melting point (expressed in °C) of the most fusible electrolyte material.

6. Method according to any of claims 1 to 3, **characterized in that** the so-called consolidation step comprises a step of applying a pressure of between 20 et 100 MPa, followed by a heat treatment step at a temperature T_{R} that does not exceed 0.7 times the melting point (expressed in °C), preferably does not exceed 0.5 times the melting point (expressed in °C), and even more preferably does not exceed 0.3 times the melting point (expressed in °C) of the most fusible electrolyte material.

7. Method according to any of claims 1 to 3, **characterized in that** the so-called consolidation step comprises an annealing step at a temperature T_{R} that does not exceed 0.7 times the melting point (expressed in °C), preferably does not exceed 0.5 times the melting point (expressed in °C), and even more preferably does not exceed 0.3 times the melting point (expressed in °C) of the most fusible electrolyte material, followed by a step of applying a pressure of between 20 and 100 MPa.

8. Method according to any of claims 1 to 3, **characterized in that** the so-called consolidation step is a heat treatment step under pressure at a temperature T_{R} that does not exceed 0.7 times the melting point (expressed in °C), preferably does not exceed 0.5 times the melting point (expressed in °C), and even more preferably does not exceed 0.3 times the melting point (expressed in °C) of the most fusible electrolyte material, at a pressure between 20 and 100 MPa.

9. Method according to any of the previous claims, **characterized in that** the consolidation step d) is done under a vacuum or under an inert atmosphere.

10. Method according to any of the previous claims, **characterized in that** the suspension of particles of electrolyte material has a dry extract of between 2 and 20 g/L, and preferably between 3 and 10 g/L.

11. Method according to any of the previous claims, **characterized in that** the suspension of particles of electrolyte material does not contain any stabilizer.

12. Method according to any of the previous claims, **characterized in that** the electrolyte film also covers the edges of said previously formed anode or cathode film.

13. Method for fabrication of a battery using the method according to one of the previous claims and comprising the steps of:
a) procuring a colloidal suspension of particles conducting lithium ions, called a "solid electrolyte materials" suspension;
b) procuring two flat conductive substrates, preferably metallic, said conductive substrates being able to be used as battery current collectors, and optionally being covered on at least part of at least one of their faces with a cathode film or anode film,
c) depositing a thin film of electrolyte by electrophoresis, from a suspension of particles of electrolyte material, on said anode film and/or said cathode film and/or said substrate obtained at step b),
d) drying the film thus obtained,
e) assembling either:
- the substrate/cathode/electrolyte stack obtained at step c) and either the substrate/anode stack obtained at step a) or the substrate/anode/electrolyte stack obtained at step c) in order to obtain a battery with a stacked "collector / anode / electrolyte / cathode / collector" structure, or
- the substrate/anode/electrolyte stack obtained at step c) and either the substrate/cathode stack obtained at step a) or the substrate/cathode/electrolyte stack obtained in step c) in order to obtain a battery with a stacked "collector / anode / electrolyte / cathode / collector" structure,
f) consolidating the thin film of electrolyte obtained at the previous step by mechanical compression and/or heat treatment.

14. Battery comprising an electrolyte film fabricated according to the method of any of claims 1 to 13.
